# EUROPÄISCHE PATENTSCHRIFT

(11) **EP 4 466 167 B1**
(45) Veröffentlichungstag und Bekanntmachung des Hinweises auf die Patenterteilung: **19.11.2025**
(21) Anmeldenummer: 23700475.9
(22) Anmeldetag: 09.01.2023
(51) Int. Cl.: B60T 7/20, B60T 8/17, B60T 13/66, B60T 13/68, B60T 17/20

(54) **BETRIEBSSICHERE FESTSTELLBREMSVENTILANORDNUNG MIT EINER WECHSELSCHALTUNG IN REIHE**
RELIABLE PARKING BRAKE VALVE ASSEMBLY WITH SWITCHING IN SERIES
ENSEMBLE DE VALVE DE FREIN DE STATIONNEMENT FIABLE AVEC UNE COMMUTATION EN SERIE

(30) Priorität: 19.01.2022 DE 102022101142
(43) Veröffentlichungstag der Anmeldung: 27.11.2024
(73) Patentinhaber: ZF CV Systems Global GmbH, 3006 Bern (CH)
(72) Erfinder: VAN THIEL, Julian, 30938 Grossburgwedel (DE)
(74) Vertreter: Rabe, Dirk-Heinrich
(86) Internationale Anmeldenummer: PCT/EP2023/050268
(87) Internationale Veröffentlichungsnummer: WO 2023/138927

(56) Entgegenhaltungen:
- DE-A1- 10 336 611
- DE-A1- 102015 008 377
- DE-A1- 102017 005 757
- DE-A1- 102019 131 930

## Beschreibung

Die Erfindung betrifft eine Feststellbremsventilanordnung für ein pneumatisches Bremssystem eines Nutzfahrzeugs, mit wenigstens einer ersten Feststellbremsventileinheit und wenigstens einer zweiten Feststellbremsventileinheit, wobei die erste Feststellbremsventileinheit durch ein erstes Feststellbremssignal angesteuert und von einer ersten Schaltstellung in eine zweite Schaltstellung schaltbar ist, und die zweite Feststellbremsventileinheit durch ein zweites Feststellbremssignal angesteuert und von einer ersten Schaltstellung in eine zweite Schaltstellung schaltbar ist. Die Erfindung betrifft ferner ein Feststellbremsmodul für ein pneumatisches Bremssystem eines Nutzfahrzeugs, mit einem Feststellbrems-Vorratsanschluss zum Empfangen von Vorratsdruck, einem Federspeicheranschluss zum Bereitstellen eines Feststellbremsdrucks, und einer eingangs genannten Feststellbremsventilanordnung. Weiterhin betrifft die Erfindung ein Nutzfahrzeug und einen Anhänger.

Bei elektropneumatischen Bremssystemen für moderne Fahrzeuge sind Sicherheitskonzepte von hoher Relevanz. Insbesondere bei Fahrzeugen mit automatisierten oder teilautomatisierten Fahrfunktionen tragen Konzepte zum Auslösen einer Ausfallbremsung in einem Fehlerfall oder einem Stromausfall einer Steuereinheit signifikant zur Sicherheit des Fahrzeugs, dessen Insassen und weiterer Verkehrsteilnehmer bei. Derartige Konzepte ermöglichen ein sicheres Halten des Fahrzeugs in einem Fehlerfall oder Stromausfall.

Grundsätzlich gibt es Konzepte, die eine Ausfallbremsung mittels eines Betriebsbremssystems realisieren und solche, die dies mittels eines Feststellbremssystems realisieren. Bremssysteme implementieren dabei öfter auch beide Konzepte, um zwei oder mehr Rückfallebenen zu realisieren, die dann auf den verschiedenen Konzepten beruhen. Bei auf einem Feststellbremssystem basierenden Konzepten besteht grundsätzlich der Vorteil, dass durch das Entlüften eines vorgespannten Federspeicherbremszylinders ein sicherer Halt des Fahrzeugs erreicht werden kann, ohne dass eine Druckbeaufschlagung eines Bremsaktuators mit Druckluft notwendig ist.

So beschreibt die DE 10 2019 131 930 A1 bereits ein elektropneumatisches Feststellbremsmodul für ein elektronisch steuerbares pneumatisches Bremssystem für ein Fahrzeug mit einem Vorratsanschluss zum Empfangen eines Vor-ratsdrucks, wenigstens einem Feststellbremsanschluss zum Anschließen wenigstens eines Feststellbremszylinders, einer den Vorratsdruck empfangenden Hauptventileinheit, die dazu ausgebildet ist, in Abhängigkeit von einem Steuerdruck einen Federspeicherdruck an dem Feststellbremsanschluss auszusteuern, und einer den Vorratsdruck empfangenden Vorsteuerventilanordnung zum Bereitstellen des Steuerdrucks, wobei die Vorsteuerventilanordnung ein Bistabilventil aufweist, das zwischen einer ersten Belüftungsstellung und einer zweiten Entlüftungsstellung umschaltbar ist, und einer Steuereinheit zum Bereitstellen von ersten und zweiten Schaltsignalen an der Vorsteuerventilanordnung.

Bei dem in DE 10 2019 131 930 A1 gezeigten elektropneumatischen Feststellbremsmodul weist die Vorsteuerventilanordnung ein mit dem Bistabilventil pneumatisch in Reihe geschaltetes und in einer Steuerleitung der Hauptventileinheit angeordnetes, monostabiles Halteventil auf, wobei das Halteventil stromlos in einer Öffnungsstellung geöffnet ist, und die Steuereinheit ausgebildet ist, das Halteventil zum Halten des Steuerdrucks mittels desersten Schaltsignals in der Haltestellung zu halten, und in der Steuerleitung zwischen dem Halteventil und einem Steueranschluss der Hauptventileinheit eine Auswahlventileinheit angeordnet ist mit einem ersten Auswahlventilanschluss zum Empfangen eines an einem Zusatz-Bremsdruckanschluss bereitgestellten Zusatzsteuerdrucks, wobei die Auswahlventileinheit am ersten Auswahlventilanschluss eine Rücksperrcharakteristik aufweist derart, dass der erste Auswahlventilanschluss in einer Strömungsrichtung vom Zusatz-Bremsdruckanschluss über einen dritten Auswahlventilanschluss zum Steueranschluss öffnet und entgegen der Strömungsrichtung sperrt.

Eine Lösung, um Federspeicherbremszylinder zu belüften, ist in DE 10 2017 005 757 A1 offenbart. Die dort offenbarte Lösung nutzt eine Vorsteuerventileinheit sowie eine Hauptventileinheit, wobei die Vorsteuerventileinheit ein elektromagnetisches Magnetventil in Form eines Bistabilventils umfasst. Die Hauptventileinheit ist in der dort offenbarten Lösung durch ein Relaisventil gebildet. Je nach Schaltstellung des elektromagnetischen Bistabilventils wird ein Steuerdruck an der Hauptventileinheit ausgesteuert, die dann in entsprechender Weise einen Volumendruck für die Federspeicherbremszylinder aussteuert. Als Bistabilventil wird ein Magnetventil bezeichnet, welches zwei stabile Schaltstellungen, insbesondere eine stabile Belüftungsstellung und eine stabile Entlüftungsstellung hat. Zu diesem Zweck kann durch Bestromen eines ersten Elektromagneten ein Anker des Magnetventils in eine erste Stellung verbracht werden, sodass das Magnetventil die Belüftungsstellung einnimmt und durch Bestromen eines zweiten Elektromagneten der Anker des Magnetventils in eine zweite Stellung verbracht werden, sodass das Magnetventil die Entlüftungsstellung einnimmt. Wenn dann keine andere Kraft auf den Anker wirkt, oder dieser in den Stellungen mechanisch und/oder magnetisch verrastbar ist, ist die jeweilige Schaltstellung stabil, da sie ohne weitere Bestromung aufrechterhalten bleiben kann.

Eine Bremsanlage mit einer weiteren gattungsgemäßen Parkbremseinrichtung ist in DE 103 36 611 A1 offenbart. Sie offenbart eine druckmittelbetriebene Bremsanlage für ein Fahrzeug mit einer Feststellbrems-Funktion, bei der infolge manueller Betätigung eines elektrischen Feststellbrems-Signalgebers wenigstens eine Radbremse der Bremsanlage ohne Betätigung eines Bremspedals über einen mit dem Druckmittel beaufschlagbaren Aktuator betätigbar ist. Hiervon ausgehend, wird eine druckmittelbetriebene Bremsanlage für ein Fahrzeug angegeben, bei der eine über einen elektrischen Signalgeber betätigbare Feststegbrems-Funktion unter Einhaltung der einschlägigen Sicherheitsbestimmungen für Bremsanlagen mit geringem Aufwand integrierbar ist. Dies wird dadurch erreicht, dass ein Feststellbrems-Modul vorgesehen ist, in welche eine elektronische Steuereinrichtung sowie eine von der elektronischen Steuereinrichtung elektrisch betätigbare Ventileinrichtung integriert sind, wobei die elektronische Steuereinrichtung bei Empfang eines die Aktivierung der Feststellbrems-Funktion anfordernden elektrischen Betätigungssignals des Feststellbrems-Signalgebers die Feststegbrems-Funktion aktiviert, wobei die elektronische Steuereinrichtung im Rahmen der Feststellbrems-Funktion mittels der elektrisch betätigbaren Ventileinrichtung die Druckmittel-Beaufschlagung des Aktuators steuert.

Weiterhin ist ein solches System beispielsweise auch aus DE 10 2015 008 377 A1 bekannt. Das dort offenbarte System umfasst ein Feststellbremsmodul einer Feststellbremseinrichtung, mit dem eine Druckmittelbeaufschlagung mindestens eines Bremsaktuators steuerbar ist. Das Feststellbremsmodul weist eine elektronische Steuereinrichtung, mindestens ein von der Steuereinrichtung betätigbares Magnetventil, ein druckmittelmengenverstärkendes Ventil zur Druckmittelbeaufschlagung des mindestens einen Bremsaktuators und mindestens einen Druckmitteleingang auf, über den dem Feststellbremsmodul Druckmittel zuführbar ist. Das Feststellbremsmodul weist einen Notlöse-Druckmittelanschluss und ein Doppelrückschlagventil auf. Das Feststellbremsmodul weist eine erste Druckmittelleitung auf, mit der der Notlöse-Druckmittelanschluss über ein Rückschlagventil mit dem Versorgungseingang des druckmittelmengenverstärkenden Ventils derart fluidisch verbunden ist, dass Druckmittel durch diese erste Druckmittelleitung von dem Notlöse-Druckmittelanschluss zu dem druckmittelmengenverstärkenden Ventil strömt, falls der an dem Notlöse-Druckmittelanschluss anliegende Druck größer als der an dem Versorgungseingang des druckmittelmengenverstärkenden Ventils anliegende Druck ist. Das Feststellbremsmodul weist eine zweite Druckmittelleitung auf, mit der der Notlöse-Druckmittelanschluss oder ein weiterer Druckmittelanschluss des Feststellbremsmoduls mit einem Eingang des Doppelrückschlagventils derart fluidisch verbunden ist, dass Druckmittel durch diese zweite Druckmittelleitung von dem Notlöse-Druckmittelanschluss zu dem Doppelrückschlagventil strömt, falls der an dem Notlöse-Druckmittelanschluss anliegende Druck größer als der an dem Eingang des Doppelrückschlagventils anliegende Druck ist. Oder wobei Druckmittel durch diese zweite Druckmittelleitung von dem weiteren Druckmittelanschluss zu dem Doppelrückschlagventil strömt, falls der an dem weiteren Druckmittelanschluss anliegende Druck größer als der an dem Eingang des Doppelrückschlagventils anliegende Druck ist.

Um die Funktionalität zu erweitern und insbesondere unabhängig vom Auftreten eines Fehlers in einer der verschiedenen Ebenen, sei es die Betriebsebene oder eine Redundanzebene des Bremssystems, die entsprechenden Federspeicherzylinder der Feststellbremse belüften und somit lösen zu können, ist es wünschenswert, dass die Federspeicherbremszylinder über zwei unabhängige Pfade angesteuert werden können, um diese zu be- und auch zu entlüften. Hierdurch soll der Funktionsumfang und die Betriebsbereitschaft des Fahrzeugs vergrößert werden, um auch im Falle von einem oder mehreren Fehlern im Bremssystem einen möglichst hohen Funktionsumfang aufrechterhalten zu können.

In einem ersten Aspekt der Erfindung wird die Aufgabe gelöst durch eine Feststellbremsventilanordnung der erstgenannten Art, bei der das erste Feststellbremssignal und das zweite Feststellbremssignal unabhängig voneinander sind, und bei der die erste Feststellbremsventileinheit und die zweite Feststellbremsventileinheit zwischen einem Feststellbrems-Vorratsanschluss und einem Feststellbrems-Arbeitsanschluss derart pneumatisch in Reihe geschaltet sind, dass der Feststellbrems-Arbeitsanschluss unabhängig von der Schaltstellung der einen Feststellbremsventileinheit durch Schalten der jeweils anderen Feststellbremsventileinheit sowohl belüftet als auch entlüftet werden kann.

Auf diese Weise ist eine Feststellbremsventilanordnung geschaffen, die durch zwei unabhängige Signale, nämlich das erste Feststellbremssignal und das zweite Feststellbremssignal jeweils zwischen einer Belüftungsstellung und einer Entlüftungsstellung, also einer Löse- und einer Zuspannstellung, geschaltet werden kann. Ist beispielsweise die erste Feststellbremsventileinheit so gesteuert, dass sie in einer ersten Schaltstellung ist, kann die zweite Feststellbremsventileinheit durch Bereitstellen des zweiten Feststellbremssignals nach wie vor in die erste und in die zweite Schaltstellung der zweiten Feststellbremsventileinheit geschaltet werden, wobei dann beispielsweise in der ersten Schaltstellung der zweiten Feststellbremsventileinheit der Feststellbrems-Arbeitsanschluss belüftet wird und in der zweiten Schaltstellung der zweiten Feststellbremsventileinheit der Feststellbrems-Arbeitsanschluss entlüftet wird. Das Gleiche gilt für den anderen Fall.

An dem Feststellbrems-Vorratsanschluss kann beispielsweise ein Vorratsdruck eines Feststellbremskreises unmittelbar oder gegebenenfalls unter Zwischenschaltung eines Wechselventils oder eines Rückschlagventils bereitgestellt werden. Andererseits kann an dem Feststellbrems-Vorratsanschluss auch ein von einem bereits in einem Fahrzeug vorhandenen Parkbremsmodul oder Parkbremskreis bereitgestellter Parkbremsdruck bereitgestellt werden. In diesem Fall kann die Parkbremsventilanordnung dazu dienen, den am Feststellbrems-Vorratsanschluss bereitgestellten Druck entweder an den Feststellbrems-Arbeitsanschluss durchzusteuern, oder diesen zu entlüften. Der Feststellbrems-Arbeitsanschluss ist vorzugsweise mit einem oder mehreren Federspeicherbremszylindern verbunden. Die Federspeicherbremszylinder können sich sowohl im Zugfahrzeug als auch in einem Anhänger befinden. Insofern kann die Feststellbremsventilanordnung auch in einem Anhängerfahrzeug umgesetzt werden.

Die Erfindung macht sich die Erkenntnis zunutze, dass durch die hier vorgeschlagene Verschaltung der ersten und zweiten Ventileinheiten jeweils unabhängig von der Schaltstellung der anderen Feststellbremsventileinheit sowohl ein Belüften als auch ein Entlüften des Feststellbrems-Arbeitsanschlusses möglich ist. Es ist jeweils nur das Schalten der einen Feststellbremsventileinheit nötig, unabhängig von der Schaltstellung der anderen Feststellbremsventileinheit.

Hierdurch kann unabhängig davon, ob beispielsweise die erste oder zweite Feststellbremsventileinheit funktionsfähig geschaltet werden kann, der Feststellbrems-Arbeitsanschluss sowohl be- als auch entlüftet werden und somit unabhängig von der Funktionsfähigkeit einer der ersten und zweiten Feststellbremsventileinheiten, die an den Feststellbrems-Arbeitsanschluss angeschlossenen Federspeicherbremszylinder gelöst oder zugespannt werden.

In einer ersten bevorzugten Ausführungsform ist die erste Feststellbremsventileinheit mit dem Feststellbrems-Vorratsanschluss verbunden und empfängt Vorratsdruck von diesem. Bevorzugt kann zudem die zweite Feststellbremsventileinheit mit dem Feststellbrems-Arbeitsanschluss verbunden sein und einen Feststellbrems-Arbeitsdruck an diesem aussteuern. An den Feststellbrems-Arbeitsanschluss können dann, wie bereits oben erwähnt, ein oder mehrere Federspeicherbremszylinder angeschlossen werden. Auch können an den Feststellbrems-Arbeitsanschluss ein oder mehrere nachgeschaltete Ventile angeschlossen werden, wie beispielsweise ein nachgeschaltetes Relaisventil oder dergleichen. Ein nachgeschaltetes Relaisventil kann dann sinnvoll sein, wenn der von der zweiten Feststellbremsventileinheit bereitgestellte Feststellbrems-Arbeitsdruck zunächst volumenverstärkt werden soll bevor dieser dann in volumenverstärkter Form einem oder mehreren Federspeicherbremszylindern bereitgestellt wird.

Bevorzugt wird das erste Feststellbremssignal von einer ersten Signalquelle und das zweite Feststellbremssignal von einer zweiten Signalquelle bereitgestellt, wobei die erste Signalquelle und die zweite Signalquelle unabhängig voneinander sind. Vorzugsweise werden die erste und die zweite Signalquelle aus zwei unabhängigen Spannungsquellen versorgt. Beispielsweise ist die erste Signalquelle ein Zentralmodul eines elektronisch steuerbaren pneumatischen Bremssystems, während die zweite Signalquelle ein Redundanzmodul des elektronisch steuerbaren pneumatischen Bremssystems ist, wobei das Zentralmodul und das Redundanzmodul aus zwei unabhängigen Spannungsquellen versorgt werden. Das Redundanzmodul kann beispielsweise mit einem Feststellbremsmodul, einem Anhängersteuermodul oder dergleichen integriert sein.

Das Zentralmodul kann auch mit einem oder mehreren Achsmodulatoren oder weiteren Modulen integriert sein. Auch ist denkbar, dass das erste und/oder das zweite Feststellbremssignal von einer übergeordneten Einheit, beispielsweise einer Einheit für autonomes Fahren, einer elektronischen Lenkeinheit, einer Luftaufbereitung oder dergleichen bereitgestellt wird. Weiter kann auch vorgesehen sein, dass eines oder beide der ersten und zweiten Feststellbremssignale manuell bereitstellbar sind, beispielsweise über im Cockpit vorgesehene Schalter oder ein manuell betätigbares Ventil.

In einer bevorzugten Weiterbildung sind die erste Feststellbremsventileinheit und die zweite Feststellbremsventileinheit zur Realisierung einer Wechselschaltungsfunktion über eine erste Ventilleitung und eine davon separate, zweite Ventilleitung miteinander verbunden. Auf diese Weise ist es möglich, dass die erste und die zweite Ventilleitung jeweils wechselweise als Belüftungs- und als Entlüftungsleitung fungieren. Ist beispielsweise die zweite Feststellbremsventileinheit in der ersten Schaltstellung könnte vorgesehen sein, dass die erste Ventilleitung als Belüftungsleitung und die zweite Ventilleitung als Entlüftungsleitung fungiert, und die erste Feststellbremsventileinheit entsprechend geschaltet ist. Durch Schalten der zweiten Feststellbremsventileinheit kann dann beispielsweise zwischen der ersten und der zweiten Ventilleitung geschaltet werden, um jeweils eine von beiden mit dem Feststellbrems-Arbeitsanschluss zu verbinden. Die erste Feststellbremsventileinheit kann in einem solchen Fall beispielsweise dazu vorgesehen sein, die pneumatische Belüftung der ersten und zweiten Ventileinheiten umzukehren. Beispielsweise ist in der ersten Schaltstellung der ersten Feststellbremsventileinheit vorgesehen, dass die erste Ventilleitung belüftet und die zweite Ventilleitung entlüftet ist. In der zweiten Schaltstellung der ersten Feststellbremsventileinheit ist hingegen die erste Ventilleitung entlüftet und die zweite Ventilleitung belüftet.

Beispielsweise ist vorgesehen, dass mittels der ersten Feststellbremsventileinheit wahlweise die erste Ventilleitung oder die zweite Ventilleitung mit Vorratsdruck beaufschlagt und entlüftet werden kann. Beispielsweise ist in der ersten Schaltstellung der ersten Feststellbremsventileinheit die erste Ventilleitung mit Vorratsdruck beaufschlagt, währen die zweite Ventilleitung entlüftet ist, und in der zweiten Schaltstellung der ersten Feststellbremsventileinheit ist die zweite Ventilleitung mit Vorratsdruck beaufschlagt, während die zweite Ventilleitung entlüftet ist.

Vorzugsweise kann mittels der zweiten Feststellbremsventileinheit wahlweise die erste Ventilleitung oder die zweite Ventilleitung mit dem Feststellbrems-Arbeitsanschluss verbunden werden.

Gemäß einer bevorzugten Weiterbildung ist vorgesehen, dass die erste Feststellbremsventileinheit ein 4/2-Wege-Ventil ist oder ein solches aufweist, mit einem ersten Feststellbremsventilanschluss, einem zweiten Feststellbremsventilanschluss, einem dritten Feststellbremsventilanschluss und einem vierten Feststellbremsventilanschluss. Vorzugsweise ist in der ersten Schaltstellung der erste Feststellbremsventilanschluss mit dem zweiten Feststellbremsventilanschluss und der dritte Feststellbremsventilanschluss mit dem vierten Feststellbremsventilanschluss verbunden. In der zweiten Schaltstellung ist vorzugsweise der erste Feststellbremsventilanschluss mit dem vierten Feststellbremsventilanschluss und der dritte Feststellbremsventilanschluss mit dem zweiten Feststellbremsventilanschluss verbunden. Es wird also in der ersten und zweiten Schaltstellung die Verbindung der jeweiligen Anschlüsse gewechselt bzw. überkreuzgeschaltet, sodass hierdurch ein Teil einer Wechselschaltung realisiert werden kann.

In einer weiteren bevorzugten Ausführungsform weist die erste Feststellbremsventileinheit ein erstes Schaltventil und ein zweites Schaltventil auf oder besteht aus diesen. Vorzugsweise sind sowohl das erste als auch das zweite Schaltventil als 3/2-Wege-Ventil ausgebildet. Sowohl das erste als auch das zweite Schaltventil werden mittels des ersten Feststellbremssignals angesteuert und geschaltet. Auf diese Weise sind sie als Feststellbremsventileinheit zusammengefasst. Die erste Feststellbremsventileinheit und die zweite Feststellbremsventileinheit können auch als erste und zweite Feststellbremsventile bezeichnet werden, während dann in der beschriebenen Ausführungsform das erste und das zweite Schaltventil als erste und zweite Ventilteile des ersten Feststellbremsventils aufgefasst werden können. Da das erste und zweite Schaltventil gemeinsam durch das erste Feststellbremssignal geschaltet werden, können diese auch zusammengefasst und als ein Ventil bezeichnet werden. Über die Verschaltung der ersten und zweiten Schaltventile, die vorzugsweise als 3/2-Wege-Ventile ausgebildet sind, kann eine Funktionalität abgebildet werden, die denen des beschriebenen 4/2-Wege-Ventils entspricht.

Gemäß einer weiteren bevorzugten Weiterbildung ist die zweite Feststellbremsventileinheit ein 3/2-Wege-Ventil oder weist ein solches auf. Das 3/2-Wege-Ventil, das die zweite Feststellbremsventileinheit bildet, weist vorzugsweise einen fünften Feststellbremsventilanschluss, einen sechsten Feststellbremsventilanschluss und einen siebten Feststellbremsventilanschluss auf. In der ersten Schaltstellung ist vorzugsweise der fünfte Feststellbremsventilanschluss mit dem sechsten Feststellbremsventilanschluss verbunden und in der zweiten Schaltstellung ist der siebte Feststellbremsventilanschluss mit dem sechsten Feststellbremsventilanschluss verbunden. Das 3/2-Wege-Ventil wird vorzugsweise durch das zweite Schaltstellung zwischen den beiden Schaltstellungen geschaltet.

Vorzugsweise ist bei der Feststellbremsventilanordnung vorgesehen, dass das erste Feststellbremssignal pneumatisch oder elektrisch ist und/oder das zweite Feststellbremssignal pneumatisch oder elektrisch ist. Ein elektrisches Signal kann unmittelbar von einer übergeordneten elektronischen Steuereinheit aus bereitgestellt werden, die das Signal ihrerseits erzeugt oder erhält und weitergibt. Ein pneumatisches Signal kann beispielsweise von elektronisch schaltbaren Magnetventilen bereitgestellt werden, oder auch durch ein oder mehrere manuell betätigbare Schieberventile. Dies ist insbesondere dann bevorzugt, wenn die Feststellbremsventilanordnung im Rahmen eines Anhängerfahrzeugs eingesetzt wird.

In einer bevorzugten Weiterbildung der Feststellbremsventilanordnung ist die erste Feststellbremsventileinheit und/oder die zweite Feststellbremsventileinheit bistabil ausgebildet. Vorzugsweise ist die erste Feststellbremsventileinheit und/oder die zweite Feststellbremsventileinheit elektromagnetisch bistabil ausgebildet. Beispielsweise ist die erste Feststellbremsventileinheit und/oder die zweite Feststellbremsventileinheit als Doppelmagnetventil mit zwei stabilen magnetischen Rastpolen ausgebildet. Dies kann einerseits dadurch realisiert werden, dass zwei Permanentmagnete an gegenüberliegenden Enden so angeordnet sind, dass der Anker in entsprechenden Endlagen gehalten wird, oder der Anker selbst ist mit entsprechenden Magnetteilen ausgestattet, um so in den beiden Endlagen gehalten werden zu können. Dies kann durch eine oder auch durch zwei Spulen realisiert werden. Dem Fachmann sind diese Gestaltungen bekannt und für weitere Einzelheiten wird auf das einschlägige Fachwissen verwiesen.

In einem zweiten Aspekt löst die Erfindung die eingangs genannte Aufgabe durch ein Feststellbremsmodul für ein pneumatisches Bremssystem eines Nutzfahrzeugs, mit einem Feststellbrems-Vorratsanschluss zum Empfangen von Vorratsdruck, einem Federspeicheranschluss zum Bereitstellen eines Feststellbremsdrucks, und einer Feststellbremsventilanordnung nach einer der vorstehend genannten bevorzugten Ausführungsformen einer Feststellbremsventilanordnung gemäß dem ersten Aspekt der Erfindung.

Während die Feststellbremsventilanordnung dazu vorgesehen sein kann, in ein bereits bestehendes System, Modul oder Anordnung integriert zu werden, ist das Feststellbremsmodul gemäß dem zweiten Aspekt der Erfindung vorzugsweise so ausgelegt, dass es als eigenständige Baueinheit verwendet werden kann. Das Feststellbremsmodul gemäß dem zweiten Aspekt der Erfindung kann neben den im Folgenden beschriebenen Eigenschaften und Funktionen auch weitere Funktionen umfassen, wie insbesondere alle oder einige der bekannten Funktionen herkömmlicher Feststellbremsmodule zum Be- und Entlüften von Federspeicherbremszylindern. Das Feststellbremsmodul gemäß dem zweiten Aspekt der Erfindung kann sowohl im Zugfahrzeug als auch in einem Anhängerfahrzeug vorgesehen sein. Vorzugsweise ist der Feststellbrems-Arbeitsanschluss mit dem Federspeicheranschluss verbunden, entweder unmittelbar oder unter Zwischenschaltung von einem oder mehreren Ventilen, wie insbesondere ein Relaisventil, wie nachfolgend noch genauer beschrieben werden wird.

In einer bevorzugten Ausführungsform des Feststellbremsmoduls umfasst diese eine erste Vorsteuereinheit, die mit dem Feststellbrems-Vorratsanschluss verbunden ist und von diesem Vorratsdruck empfängt, wobei die erste Vorsteuereinheit schaltbar ist, um einen ersten Steuerdruck auszusteuern, wobei der erste Steuerdruck zum Schalten wenigstens des ersten Feststellbremsventils als erstes Feststellbremssignal an diesem ausgesteuert wird. Der erste Steuerdruck bildet gemäß dieser Ausführungsform also das erste Feststellbremssignal, sodass das erste Feststellbremssignal in dieser Ausführungsform ein pneumatisches erstes Feststellbremssignal ist. Die erste Feststellbremsventileinheit wird gemäß dieser Ausführungsform also pneumatisch geschaltet, basieren auf dem ersten Steuerdruck, der von der ersten Vorsteuereinheit bereitgestellt wird.

In einer bevorzugten Weiterbildung des Feststellbremsmoduls weist dieses eine zweite Vorsteuereinheit auf, wobei die zweite Vorsteuereinheit mit dem Feststellbrems-Vorratsanschluss verbunden ist und von diesem Vorratsdruck empfängt, wobei die zweite Vorsteuereinheit schaltbar ist, um einen zweiten Steuerdruck auszusteuern, wobei der zweite Steuerdruck zum Schalten wenigstens der zweiten Feststellbremsventileinheit als zweites Feststellbremssignal an diesem ausgesteuert wird. Gemäß dieser Ausführungsform ist auch das zweite Feststellbremssignal ein pneumatisches Signal und wird durch den zweiten Steuerdruck gebildet. Die zweite Feststellbremsventileinheit ist demnach pneumatisch schaltbar und das zweite Feststellbremssignal wird pneumatisch durch die Vorsteuereinheit vorgegeben.

In einer bevorzugten Weiterbildung des Feststellbremsmoduls weist dieses eine erste elektronische Steuereinheit auf. Die erste elektronische Steuereinheit dient vorzugsweise zum Ansteuern der ersten Vorsteuereinheit, kann aber ebenso auch zum unmittelbaren Ansteuern der ersten Feststellbremsventileinheit dienen, für den Fall, dass die erste Feststellbremsventileinheit elektrisch schaltbar ist und das erste Feststellbremssignal ein elektrisches Schaltsignal ist. Ferner weist das Feststellbremsmodul vorzugsweise eine zweite elektronische Steuereinheit auf, zum Ansteuern der zweiten Vorsteuereinheit oder zum unmittelbaren Ansteuern der zweiten Feststellbremsventileinheit. Die erste und die zweite elektronische Steuereinheit sind vorzugsweise in das Feststellbremsmodul integriert, können aber ebenso extern zu diesem angeordnet sein. Die erste und die zweite elektronische Steuereinheit werden vorzugsweise aus verschiedenen und unabhängig voneinander vorgesehenen Spannungsquellen versorgt.

In einer bevorzugten Ausführung ist das erste Feststellbremssignal oder das zweite Feststellbremssignal ein manueller pneumatischer Druck eines Handventils. Ein derartiges Handventil kann in dem Feststellbremsmodul vorgesehen oder mit diesem verbunden sein. Ein Handventil ist vorzugsweise als manuell betätigbares Schieberventil vorgesehen. Derartige Handventile werden insbesondere bei Anhängerfahrzeugen vorgesehen, um so manuell insbesondere von außerhalb des Anhängers, das erste und/oder zweite Feststellbremssignal vorzugeben. Auf diese Weise lässt sich ein manuelles Be- und Entlüften der Federspeicherbremszylinder bewirken.

Bevorzugt ist ferner vorgesehen, dass das Feststellbremsmodul ein Relaisventil aufweist, welches mit dem Feststellbrems-Vorratsanschluss zum Empfangen des Vorratsdrucks verbunden ist und welches mit der Feststellbremsventilanordnung verbunden ist und an einem Steueranschluss von der Feststellbremsventilanordnung den Feststellbrems-Arbeitsdruck empfängt und in Antwort auf den Empfang des Feststellbrems-Arbeitsdrucks den Feststellbremsdruck an dem Federspeicheranschluss aussteuert. Das Relaisventil dient demnach vorzugsweise dazu, den Feststellbrems-Arbeitsdruck zu volumenverstärken und diesen dann volumenverstärkt als Feststellbremsdruck auszusteuern. Dies ist insbesondere dann bevorzugt, wenn ein oder mehrere Federspeicherbremszylinder, die ein größeres Volumen benötigen, an den Federspeicheranschluss angeschlossen sind.

In einer solchen Anordnung ist vorzugsweise auch ein Halteventil vorgesehen, welches zwischen der Feststellbremsventilanordnung und dem Relaisventil angeordnet ist, zum Ein- bzw. Aussperren des Feststellbrems-Arbeitsdrucks.

Gemäß einem dritten Aspekt der Erfindung wird die eingangs genannte Aufgabe gelöst durch ein Nutzfahrzeug mit einem elektronisch steuerbaren pneumatischen Bremssystem und einem Feststellbremsmodul nach einer der vorstehend beschriebenen bevorzugten Ausführungsformen eines Feststellbremsmoduls gemäß dem zweiten Aspekt der Erfindung. Es soll verstanden werden, dass das Feststellbremsmodul gemäß dem zweiten Aspekt der Erfindung sowie das Nutzfahrzeug gemäß dem dritten Aspekt der Erfindung gleiche und ähnliche Unteraspekte aufweisen, wie sie insbesondere in den abhängigen Ansprüchen niedergelegt sind. Auch kann vorgesehen sein, dass das Nutzfahrzeug ein elektronisch steuerbares pneumatisches Bremssystem und eine Feststellbremsventilanordnung gemäß dem ersten Aspekt der Erfindung aufweist, die dann vorzugsweise die weiteren Geräte oder Module des elektronisch steuerbaren pneumatischen Bremssystems integriert ist.

In einem vierten Aspekt der Erfindung löst die Erfindung die eingangs genannte Aufgabe durch einen Anhänger mit einem elektronisch steuerbaren pneumatischen Bremssystem und einem Feststellbremsmodul nach einer der vorstehend beschriebenen bevorzugten Ausführungsformen eines Feststellbremsmoduls gemäß dem zweiten Aspekt der Erfindung oder durch eine Feststellbremsventilanordnung gemäß dem ersten Aspekt der Erfindung. Für den Anhänger gemäß dem vierten Aspekt der Erfindung gilt das bereits zuvor gemäß dem dritten Aspekt der Erfindung Gesagte.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
Fig. 1 eine erste Ausführungsform einer Feststellbremsventilanordnung gemäß dem ersten Aspekt der Erfindung;
Fig. 2 eine zweite Ausführungsform einer Feststellbremsventilanordnung gemäß dem ersten Aspekt der Erfindung;
Fig. 3 ein erstes Ausführungsbeispiel eines Feststellbremsmoduls gemäß dem zweiten Aspekt der Erfindung;
Fig. 4 ein zweites Ausführungsbeispiel eines Feststellbremsmoduls gemäß dem zweiten Aspekt der Erfindung;
Fig. 5 ein drittes Ausführungsbeispiel eines Feststellbremsmoduls gemäß dem zweiten Aspekt der Erfindung;
Fig. 6 ein viertes Ausführungsbeispiel eines Feststellbremsmoduls gemäß dem zweiten Aspekt der Erfindung;
Fig. 7 ein fünftes Ausführungsbeispiel eines Feststellbremsmoduls gemäß dem zweiten Aspekt der Erfindung;
Fig. 8 ein sechstes Ausführungsbeispiel eines Feststellbremsmoduls gemäß dem zweiten Aspekt der Erfindung; und
Fig. 9 ein siebtes Ausführungsbeispiel eines Feststellbremsmoduls gemäß dem zweiten Aspekt der Erfindung.

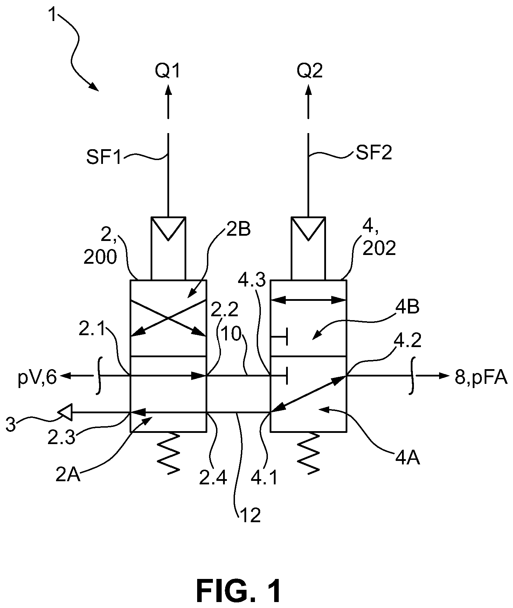

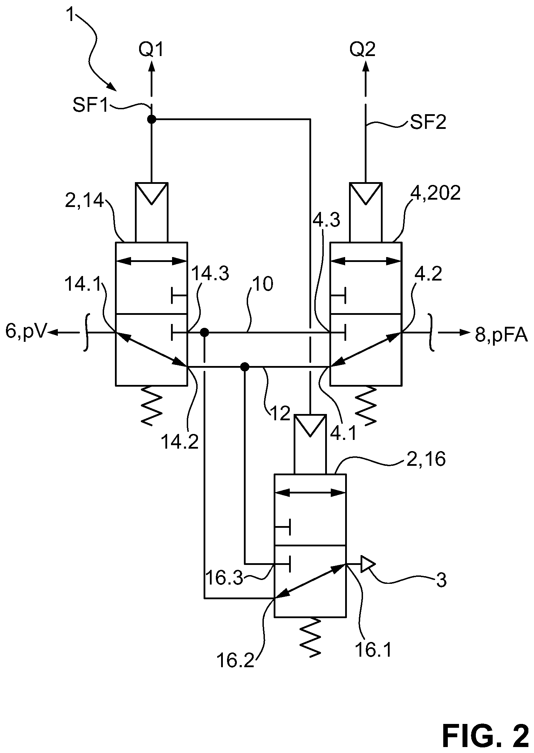

Zunächst wird anhand der Figuren 1 und 2 eine Feststellbremsventilanordnung 1 in zwei verschiedenen grundlegenden Ausführungsformen beschrieben. Die Feststellbremsventilanordnung 1 umfasst eine erste Feststellbremsventileinheit 2 und eine zweite Feststellbremsventileinheit 4. Die erste Feststellbremsventileinheit 2 und die zweite Feststellbremsventileinheit 4 sind in Reihe geschaltet. Die erste Feststellbremsventileinheit 2 ist mit einem hier nicht näher bezeichneten Feststellbrems-Vorratsanschluss 6 verbunden und empfängt Vorratsdruck pV von diesem. Die zweite Feststellbremsventileinheit 4 ist mit einem hier nicht näher bezeichneten Feststellbrems-Arbeitsanschluss 8 verbunden und stellt einen Feststellbrems-Arbeitsdruck pFA an diesem bereit. Der Feststellbrems-Arbeitsdruck pFA kann zwischen dem Umgebungsdruck und einem höheren oder hohen Druck variieren, der zum Lösen von Federspeicherbremszylindern (in den Figuren 1 und 2 nicht gezeigt) zum Lösen von Federspeicherbremszylindern geeignet ist. Die ersten und zweiten Feststellbremsventileinheiten 2, 4 sind zwischen dem Feststellbrems-Vorratsanschluss 6 und dem Feststellbrems-Arbeitsanschluss 8 in Reihe geschaltet. Zwischen den ersten und zweiten Feststellbremsventileinheiten 2, 4 verlaufen eine erste Ventilleitung 10 und eine zweite Ventilleitung 12 parallel zueinander.

Konkret ist in dem in Fig. 1 gezeigten Ausführungsbeispiel die erste Feststellbremsventileinheit 2 durch ein 4/2-Wege-Ventil 200 gebildet, welches eine Überkreuzschaltung aufweist. Die erste Feststellbremsventileinheit 2 weist in dem hier gezeigten Ausführungsbeispiel (Fig. 1) einen ersten Feststellbremsventilanschluss 2.1, einen zweiten Feststellbremsventilanschluss 2.2., einen dritten Feststellbremsventilanschluss 2.3 und einen vierten Feststellbremsventilanschluss 2.4 auf. Die erste Feststellbremsventileinheit 2 kann zwischen einer ersten Schaltstellung 2A und einer zweiten Schaltstellung 2B hin- und hergeschaltet werden, ist aber federbelastet in die erste Schaltstellung 2A vorgespannt. Durch Aussteuern eines ersten Feststellbremssignals SF1 an der ersten Feststellbremsventileinheit 2 wird die erste Feststellbremsventileinheit 2 von der ersten Schaltstellung 2A, die in Fig. 1 gezeigt ist, in die zweite in Fig. 2 nicht gezeigte Schaltstellung 2B geschaltet. Dabei kann das erste Feststellbremssignal SF1 sowohl elektrisch als auch pneumatisch sein, je nach konkreter Ausgestaltung der ersten Feststellbremsventileinheit 2. In der ersten Schaltstellung 2A der ersten Feststellbremsventileinheit 2 ist der erste mit dem zweiten Feststellbremsventilanschluss 2.1, 2.2 verbunden und der dritte mit dem vierten Feststellbremsventilanschluss 2.3, 2.4. In der zweiten Schaltstellung 2B der ersten Feststellbremsventileinheit 2 ist der erste Feststellbremsventilanschluss 2.1 mit dem vierten Feststellbremsventilanschluss 2.4 verbunden und der zweite Feststellbremsventilanschluss 2.2 ist mit dem dritten Feststellbremsventilanschluss 2.3 verbunden. In dem in Fig. 1 gezeigten konkreten Ausführungsbeispiel ist der erste Feststellbremsventilanschluss 2.1 mit dem Feststellbrems-Vorratsanschluss 6 verbunden und der dritte Feststellbremsventilanschluss 2.3 mit einer Entlüftung 3. Der zweite Feststellbremsventilanschluss 2.2 ist mit der ersten Ventilleitung 10 verbunden und der vierte Feststellbremsventilanschluss 2.4 ist mit der zweiten Ventilleitung 12 verbunden. In der ersten Schaltstellung 2A (Fig. 1) ist demnach die erste Ventilleitung 10 mit dem Vorratsdruck pV belüftet, während die zweite Ventilleitung 12 entlüftet ist. Wird die erste Feststellbremsventileinheit 2 in die zweite Schaltstellung 2B geschaltet, werden die Anschlüsse überkreuz verbunden, sodass dann die zweite Ventilleitung 12 mit Vorratsdruck pV beaufschlagt ist, während die erste Ventilleitung 10 entlüftet ist.

Die zweite Feststellbremsventileinheit 4 ist in dem in Fig. 1 gezeigten Ausführungsbeispiel ein 3/2-Wege-Ventil 202 und hat einen fünften Feststellbremsventilanschluss 4.1, einen sechsten Feststellbremsventilanschluss 4.2 und einen siebten Feststellbremsventilanschluss 4.3. Auch das 3/2-Wege-Ventil 202, welches die zweite Feststellbremsventileinheit 4 bildet, ist federbelastet in einer ersten Schaltstellung 4A und kann durch Bereitstellen eines zweiten Schaltsignals SF2, das wiederum elektrisch oder pneumatisch sein kann, in die zweite Schaltstellung 4B geschaltet werden, die in Fig. 1 nicht gezeigt ist. In der in Fig. 1 gezeigten ersten Schaltstellung 4A ist der fünfte Feststellbremsventilanschluss 4.1 mit dem siebten Feststellbremsventilanschluss 4.2 verbunden, während in der zweiten Schaltstellung 4B der siebte Feststellbremsventilanschluss 4.3 mit dem sechsten Feststellbremsventilanschluss 4.2 verbunden ist. In der in Fig. 1 gezeigten Schaltstellung der ersten und zweiten Feststellbremsventileinheiten 2, 4 ist demnach der sechste Feststellbremsventilanschluss 4.2 mit der Entlüftung 3 verbunden, während der siebte Feststellbremsventilanschluss 4.3 verschlossen ist. Der sechste Feststellbremsventilanschluss 4.2 ist mit dem Feststellbrems-Arbeitsanschluss 8 verbunden und steuert den Feststellbrems-Arbeitsdruck pFA aus. Durch Schalten der zweiten Feststellbremsventileinheit 4 in die zweite Schaltstellung 4B kann also der Feststellbrems-Arbeitsanschluss 8 in dem hier gezeigten Ausführungsbeispiel belüftet werden.

Verbleibt nun beispielsweise die zweite Feststellbremsventileinheit 4 in der ersten Schaltstellung 4A, wie in Fig. 1 gezeigt, und lässt sich nicht mehr durch Bereitstellen des zweiten Feststellbremssignals SF2 schalten, kann der Feststellbrems-Arbeitsanschluss 8 dennoch belüftet werden. Zu diesem Zweck muss dann in die erste Feststellbremsventileinheit 2 geschaltet werden, sodass der Druck zwischen der ersten und zweiten Ventilleitung 10, 12 getauscht wird und nicht mehr die zweite Ventilleitung 12 mit der Entlüftung 3 verbunden ist und die erste Ventilleitung 10 mit Vorratsdruck pV beaufschlagt ist, sondern umgekehrt. In diesem Fall wird dann die zweite Ventilleitung 12 mit Vorratsdruck beaufschlagt und der fünfte Feststellbremsventilanschluss 4.1 empfängt Vorratsdruck, der dann in der in Fig. 1 gezeigten ersten Schaltstellung 4A der zweiten Feststellbremsventileinheit 4 an den sechsten Feststellbremsventilanschluss 4.2 weitergeleitet und dort an dem Feststellbrems-Arbeitsanschluss 8 ausgesteuert wird. Unabhängig von den jeweiligen Schaltstellungen der ersten und zweiten Feststellbremsventileinheiten 2, 4 kann also jeweils durch Schalten von einer der ersten und zweiten Feststellbremsventileinheiten 2, 4 der Feststellbrems-Arbeitsanschluss 8 be- und entlüftet werden.

In Fig. 2 ist eine zu Fig. 1 alternative Schaltstellung gezeigt, bei der die erste Feststellbremsventileinheit 2 nicht durch ein 4/2-Wege-Ventil 200 gebildet ist, sondern durch ein erstes Schaltventil 14 und ein zweites Schaltventil 16, die jeweils als 3/2-Wege-Ventile ausgebildet sind. Das erste Schaltventil 14 weist einen ersten Schaltventilanschluss 14.1, einen zweiten Schaltventilanschluss 14.2 und einen dritten Schaltventilanschluss 14.3 auf. In einer ersten in Fig. 2 gezeigten Schaltstellung 2A der ersten Feststellbremsventileinheit 2 ist der erste Schaltventilanschluss 14.1 mit dem zweiten Schaltventilanschluss 14.2 verbunden. In der zweiten in Fig. 2 nicht gezeigten Schaltstellung 2B ist der erste Schaltventilanschluss 14.1 mit dem dritten Schaltventilanschluss 14.3 verbunden. In dem in Fig. 2 gezeigten Ausführungsbeispiel ist der erste Schaltventilanschluss 14.1 mit dem Feststellbrems-Vorratsanschluss 6 verbunden und entspricht somit dem ersten Feststellbremsventilanschluss 2.1. Der zweite Schaltventilanschluss 14.2 ist mit der zweiten Ventilleitung 12 verbunden und entspricht so dem vierten Feststellbremsventilanschluss 2.4. Der dritte Schaltventilanschluss 14.3 ist mit der ersten Ventilleitung 10 verbunden und entspricht so dem zweiten Feststellbremsventilanschluss 2.2. Um die Belüftungs- und Entlüftungsstellung der ersten und zweiten Ventilleitungen 10, 12 zu wechseln, ist das zweite Schaltventil 16 vorgesehen. Das zweite Schaltventil 16 weist einen fünften Schaltventilanschluss 16.1 auf, der mit der Entlüftung 3 verbunden ist und somit in etwa in der Funktionalität dem dritten Feststellbremsventilanschluss 2.3 entspricht. Das zweite Schaltventil 16 weist ferner einen fünften Schaltventilanschluss 16.2 auf, der mit der ersten Ventilleitung 10 verbunden ist, sowie einen sechsten Schaltventilanschluss 16.3, der mit der zweiten Ventilleitung 12 verbunden ist. Das zweite Schaltventil 16 kann wahlweise den fünften und den sechsten Schaltventilanschluss 16.2, 16.3 verschließen oder entlüften und somit den Druck in der ersten bzw. zweiten Ventilleitung 10, 12 aufrechthalten oder entlüften. Das erste Schaltventil 14 kann entweder den zweiten oder dritten Schaltventilanschluss 14.2, 14.3 verschließen und so den Druck in der entsprechenden ersten oder zweiten Ventilleitung 10, 12 aufrechterhalten oder den zweiten oder dritten Schaltventilanschluss 14.2, 14.3 mit Vorratsdruck pV beaufschlagen und so in entsprechender Weise die erste oder zweite Ventilleitung 10, 12 mit Vorratsdruck beaufschlagen. Die Verschaltungen der ersten und zweiten Schaltventile 14, 16 sind so gewählt, dass, solange das erste Feststellbremssignal SF1 nicht bereitgestellt wird und die erste Feststellbremsventileinheit 2 in der ersten in Fig. 2 gezeigten Schalstellung 2A ist, die zweite Ventilleitung 12 mit Vorratsdruck beaufschlagt und die erste Ventilleitung 10 entlüftet ist. Wird das erste Feststellbremssignal SF1 bereitgestellt, wechselt die Schaltstellung in die in Fig. 2 nicht gezeigte zweite Schaltstellung 2B, in der die erste Ventilleitung 10 mit Vorratsdruck pV beaufschlagt und die zweite Ventilleitung 12 mit der Entlüftung 3 verbunden und somit entlüftet ist.

Auf diese Weise ist durch die ersten und zweiten Feststellbremsventileinheiten 2, 4 eine Wechselschaltung erreicht, die, so wie in den Figuren 1 und 2 gezeigt, sowohl im Zugfahrzeug als auch im Anhängerfahrzeug eingesetzt werden kann, um insbesondere Federspeicherbremszylinder zu be- und entlüften. Gemäß der Erfindung ist dabei auch vorgesehen, dass die ersten und zweiten Feststellbremssignale SF1, SF2 von unabhängigen Quellen bereitgestellt werden, nämlich das erste Feststellbremssignal SF1 wird von einer ersten Signalquelle Q1 und das zweite Feststellbremssignal SF2 wird von einer zweiten Signalquelle Q2 bereitgestellt. Diese ersten und zweiten Signalquellen Q1, Q2 können elektrischer oder pneumatischer Natur sein.

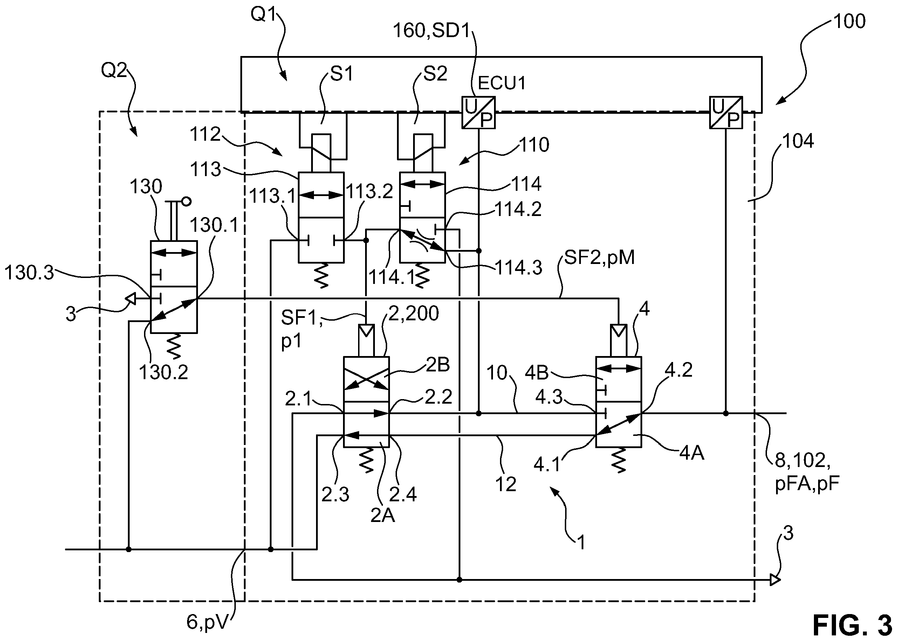

Die weiteren Figuren 3 bis 9 zeigen nun konkrete Ausführungsbeispiele eines Feststellbremsmoduls 100, in welchem die Feststellbremsventilanordnung 1 gemäß der vorliegenden Erfindung eingesetzt ist. Dabei ist beispielhaft jeweils nur die Feststellbremsventilanordnung 1 gemäß dem ersten in Fig. 1 gezeigten Ausführungsbeispiel gezeigt, wobei bei allen Ausführungsbeispielen der Figuren 3 bis 9 verstanden werden soll, dass die Feststellbremsventilanordnung 1 ebenso wie in Fig. 2 gezeigt ausgebildet sein kann, und ebenso stets das in den Figuren 3 bis 9 gezeigte 4/2-Wege-Ventil 200 durch die ersten und zweiten Schaltventile 14,16 ersetzt werden kann, die mit Bezug auf die Figuren 1 und 2 beschrieben wurde.

In Fig. 3 ist zunächst ein Feststellbremsmodul 100 gezeigt, welches eine erste elektronische Steuereinheit ECU1 umfasst, die hier eine erste Signalquelle Q1 bildet. Das Feststellbremsmodul 100 umfasst einen Federspeicheranschluss 102, der in einem Gehäuse 104 des Feststellbremsmoduls 100 angeordnet ist. Der Federspeicheranschluss 102 wird hier durch den Feststellbrems-Arbeitsanschluss 8 gebildet, und insofern ist die Feststellbremsventilanordnung 1 unmittelbar mit dem Federspeicheranschluss 102 verbunden und steuert unmittelbar den Feststellbrems-Arbeitsdruck pFA als Feststellbremsdruck pF an diesem aus. Die erste elektronische Steuereinheit ECU1 wirkt in dem in Fig. 3 gezeigten Ausführungsbeispiel mit einer ersten Vorsteuereinheit 110 zusammen, die im Grunde wie bekannte Vorsteuereinheiten bekannter Feststellbremsmodule gebildet ist. Die erste Vorsteuereinheit 110 umfasst eine Einlass-Auslass-Ventileinheit 112 mit einem Einlassventil 113 und einem Auslassventil 114. Das Einlassventil 113 ist als 2/2-Wege-Ventil ausgebildet mit einem ersten Einlassventilanschluss 113.1 und einem zweiten Einlassventilanschluss 113.2, wobei der erste Einlassventilanschluss 113.1 mit dem Feststellbrems-Vorratsanschluss 6 verbunden ist und Vorratsdruck pV empfängt. Der zweite Einlassventilanschluss 113.2 ist mit der ersten Feststellbremsventileinheit 2 verbunden und stellt einen ersten Steuerdruck p1 an dieser bereit, der hier das erste Feststellbremssignal SF1 verkörpert. Durch Bereitstellen eines ersten Schaltsignals S1 durch die erste elektronische Steuereinheit ECU1 kann das Einlassventil 113 in die zweite in Fig. 3 nicht gezeigte Schaltstellung gebracht werden, in der der erste Steuerdruck p1 ausgesteuert wird. Stromlos ist das Einlassventil 113 in einer geschlossenen Schaltstellung. Das Auslassventil 114 ist als 3/2-Wege-Ventil ausgebildet und hat einen ersten Auslassventilanschluss 114.1, einen zweiten Auslassventilanschluss 114.2 und einen dritten Auslassventilanschluss 114.3. Der erste Auslassventilanschluss 114.1 ist mit der ersten Feststellbremsventileinheit 2 verbunden, der zweite Auslassventilanschluss 114.2 ist mit der Entlüftung 3 verbunden und der dritte Auslassventilanschluss 114.3 ist mit der ersten Ventilleitung 10 verbunden. Ebenso könnte der dritte Auslassventilanschluss 114.3 auch mit der zweiten Ventilleitung 12 verbunden sein, dies ist abhängig davon, welche der ersten und zweiten Ventilleitungen 10, 12 im Normalbetrieb mit Vorratsdruck beaufschlagt sein soll. In der stromlosen in Fig. 3 gezeigten Schaltstellung ist der erste Auslassventilanschluss 114.1 mit dem dritten Auslassventilanschluss 114.3 verbunden, sodass der in der ersten Ventilleitung 10 ausgesteuerte Druck rückgeführt wird als erster Steuerdruck p1. Auf diese Weise soll eine Selbsthaltung der ersten Feststellbremsventileinheit 2 erreicht werden. Der von dieser in die erste Ventilleitung 10 ausgesteuerte Druck wird über das Auslassventil 114 rückgeführt. Durch Bereitstellen des zweiten Schaltsignals S2 lässt sich das Auslassventil 114 in eine Entlüftungsstellung bringen, in der der erste Steuerdruck p1 über die Entlüftung 3 entlüftet werden kann.

Die zweite Feststellbremsventileinheit 4 ist in dem in Fig. 3 gezeigten Ausführungsbeispiel mit einem Handventil 130 verbunden, welches insbesondere als Schieberventil ausgebildet sein kann. Das Handventil 130 bildet hier die zweite Signalquelle Q2. Das Handventil 130 ist benachbart zum Feststellbremsmodul 100 gezeigt, kann aber auch entfernt von diesem insbesondere an einer Außenseite eines Anhängers angeordnet sein. Das Handventil 130 hat einen ersten Handventilanschluss 130.1, einen zweiten Handventilanschluss 130.2 und einen dritten Handventilanschluss 130.3. Der erste Handventilanschluss 130.1 ist mit der zweiten Feststellbremsventileinheit 4 verbunden und stellt einen manuellen Druck pM an dieser bereit, der hier das zweite Feststellbremssignal SF2 verkörpert. Der zweite Handventilanschluss 130.2 ist mit dem Feststellbrems-Vorratsanschluss 6 verbunden und empfängt Vorratsdruck pV. Ebenso könnte der zweite Handventilanschluss 130.2 aber auch separat von dem Feststellbrems-Vorratsanschluss 6 mit einer Vorratsdruckquelle verbunden sein. Die in Fig. 3 gezeigte Verbindung stellt lediglich dar, dass sowohl der Feststellbrems-Vorratsanschluss 6 als auch der zweite Handventilanschluss 130.2 aus demselben Druckluftvorrat gespeist werden. Der dritte Handventilanschluss 130.3. ist mit einer Entlüftung 3 verbunden. Durch Verbringen des Handventils 130 in die zweite in Fig. 3 nicht gezeigte Schaltstellung kann demnach der manuell ausgesteuerte Druck pM entlüftet werden, sodass die zweite Feststellbremsventileinheit 4 in die erste Schaltstellung 4A federbelastet fällt, die in Fig. 3 gezeigt ist.

Im üblichen Betriebszustand des Fahrzeugs, in dem ein Feststellbremsmodul 100 gemäß Fig. 3 eingesetzt ist, sollte zunächst das erste Schaltsignal S1 bereitgestellt werden, um die erste Feststellbremsventileinheit 2 in die zweite in Fig. 3 nicht gezeigte Schaltstellung zu bringen, sodass die erste Ventilleitung 10 belüftet ist. Über das nicht geschaltete Auslassventil 114 wird der in der ersten Ventilleitung 10 ausgesteuerte Druck rückgeführt und bleibt als erster Steuerdruck p1 aufrechterhalten, sodass die erste Feststellbremsventileinheit 2 in der zweiten Schaltstellung 2B verharrt. Gleichzeitig befindet sich das Handventil 130 in der in Fig. 3 gezeigten Schaltstellung, sodass der manuelle Druck pM ausgesteuert wird, welcher die zweite Feststellbremsventileinheit 4 in die zweite in Fig. 3 nicht gezeigte Schaltstellung 4B schaltet, sodass der Vorratsdruck pV von der ersten Ventilleitung 10 durchgesteuert wird und der Feststellbremsdruck pF ausgesteuert werden kann. Auf diese Weise können die Federspeicherbremszylinder, die an den Federspeicheranschluss 102 angeschlossen sind, belüftet und gelöst werden. Nun kann, wenn das Fahrzeug abgestellt wird, durch Bereitstellen des zweiten Schaltsignals S2 das Auslassventil 114 in die zweite in Fig. 3 nicht gezeigte Schaltstellung verbracht werden, sodass der erste Steuerdruck p1 entlüftet wird und die erste Feststellbremsventileinheit 2 in die erste Schaltstellung 2A wie in Fig. 3 gezeigt geschaltet wird. Die erste Ventilleitung 10 ist dann drucklos. Über die zweite Feststellbremsventileinheit 4 wird demnach auch der Federspeicheranschluss 102 entlüftet, sodass die an den Federspeicheranschluss 102 angeschlossenen Federspeicherbremszylinder entlüftet werden und zuspannen. Nun kann ein Bediener durch Betätigen des Handventils 130 den manuell ausgesteuerten Druck pM entlüften, sodass auch die zweite Feststellbremsventileinheit 4 in die erste in Fig. 3 gezeigte Schaltstellung 4A geschaltet wird, sodass sowohl die erste als auch die zweite Feststellbremsventileinheit 2, 4 die in Fig. 3 gezeigten Schaltstellungen einnehmen. In diesen ist zu erkennen, dass der Vorratsdruck pV über den zweiten und vierten Feststellbremsventilanschluss 2.3, 2.4 in die zweite Ventilleitung 12 ausgesteuert wird und von dieser über den fünften Feststellbremsventilanschluss 4.1 und den sechsten Feststellbremsventilanschluss 4.2 am Federspeicheranschluss 102 ausgesteuert wird, sodass in der Folge wiederum die an den Federspeicheranschluss 112 angeschlossenen Federspeicherbremszylinder belüftet werden können und somit gelöst werden können.

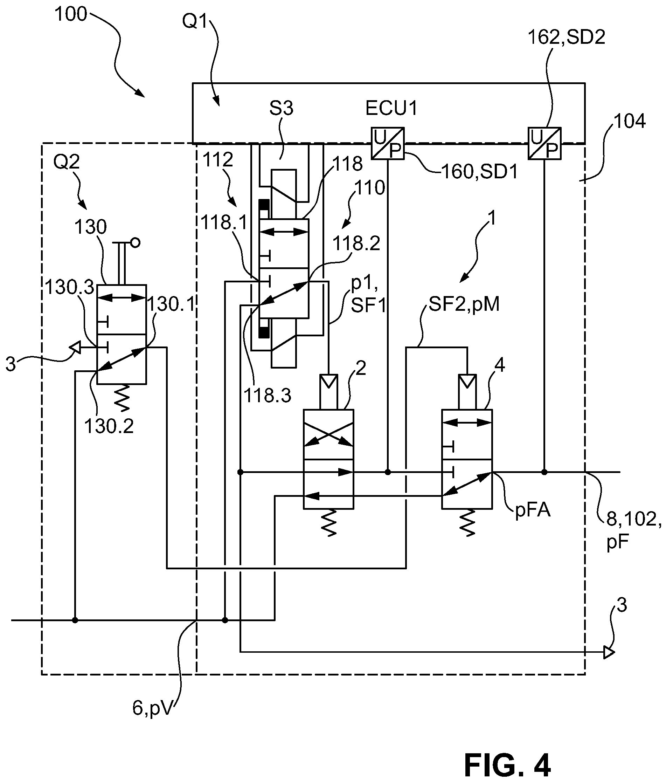

Das in Fig. 4 gezeigte Ausführungsbeispiel basiert auf dem in Fig. 1 gezeigten Ausführungsbeispiel, sodass gleiche und ähnliche Elemente mit gleichen Bezugszeichen versehen sind und im Folgenden nur auf die Unterschiede eingegangen wird. Im Unterschied zu dem Ausführungsbeispiel gemäß Fig. 3 ist die Einlass-Auslass-Ventileinheit 112 durch ein einziges Bistabilventil 118 gebildet, welches zwei elektromagnetische Raststellungen aufweist und insofern eine elektromagnetische Bistabilität bereitstellt. Das Bistabilventil 118 weist einen ersten Bistabilventilanschluss 118.1 auf, der mit dem Feststellbrems-Vorratsanschluss 6 verbunden ist und Vorratsdruck pV empfängt, einen zweiten Bistabilventilanschluss 118.2, der mit der ersten Feststellbremsventileinheit 2 verbunden ist und den ersten Steuerdruck p1 aussteuern kann, um das erste Feststellbremssignal SF1 zu verkörpern, sowie einen dritten Bistabilventilanschluss 118.3, der mit der Entlüftung 3 verbunden ist. Durch Schalten des Bistabilventils 118 basierend auf einem dritten Schaltsignal, das von der ersten elektronischen Steuereinheit ECU1 bereitgestellt wird, kann entweder der erste Steuerdruck p1 bereitgestellt oder entlüftet werden.

In dem ersten Ausführungsbeispiel gemäß Fig. 3 ist bereits ein erster Drucksensor 160 gezeigt, der ein erstes Drucksignal SD1 an der ersten elektronischen Steuereinheit ECU1 bereitstellt. Das erste Drucksignal SD1 repräsentiert den in der ersten Ventilleitung 10 anliegenden Druck. Über das erste Drucksignal SD1 kann also eine Plausibilisierung des ausgesteuerten Feststellbremsdrucks pF erfolgen und auch eine Verifizierung der Schaltstellungen der ersten und zweiten Feststellbremsventileinheiten 2, 4. Neben diesem ersten Drucksensor 116 umfasst das Feststellbremsmodul 100 gemäß Fig. 4 auch einen zweiten Drucksensor 162, der ein zweites Drucksignal SD2 an der ersten elektronischen Steuereinheit ECU1 bereitstellt. Das zweite Drucksignal SD2 repräsentiert den am Feststellbrems-Arbeitsanschluss 8 ausgesteuerten Druck, in dem hier gezeigten Ausführungsbeispiel den Feststellbrems-Arbeitsdruck pFA. Auch hierüber kann eine Plausibilisierung und eine Feststellung der Schaltstellungen der Ventile erfolgen.

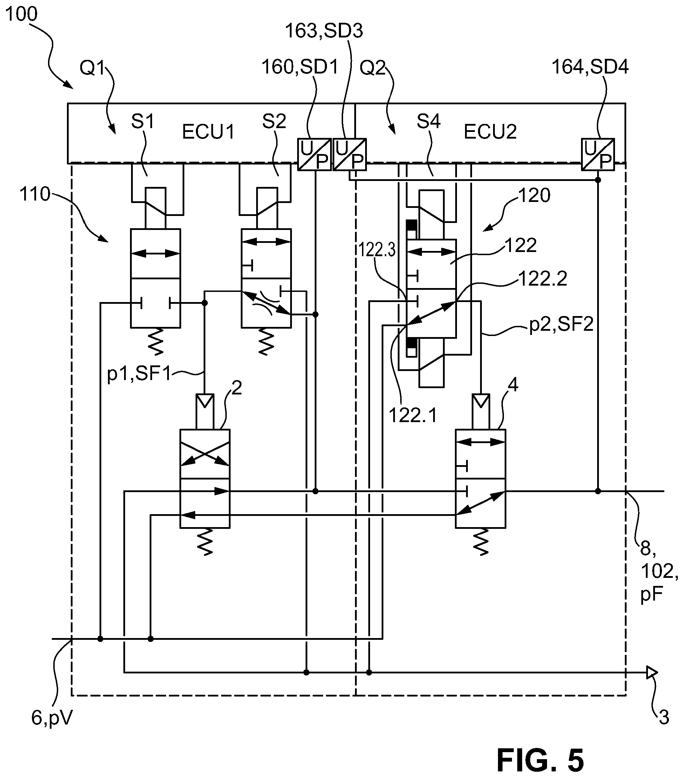

Das in Fig. 5 gezeigte Ausführungsbeispiel des Feststellbremsmoduls 100 basiert wiederum auf dem vorherigen Ausführungsbeispiel, sodass gleiche und ähnliche Elemente mit gleichen Bezugszeichen versehen sind und insofern vollumfänglich auf die obige Beschreibung Bezug genommen wird. Die erste Feststellbremsventileinheit 2 ist in Übereinstimmung mit dem in Fig. 3 gezeigten Ausführungsbeispiel gebildet, ebenso wie die erste Vorsteuereinheit 110, die den ersten Steuerdruck p1 an der ersten Feststellbremsventileinheit 2 bereitstellt.

In Abweichung zu den vorherigen Ausführungsbeispielen wird aber die zweite Feststellbremsventileinheit 4 nicht durch einen manuellen Druck pM, sondern durch einen zweiten Steuerdruck p2 angesteuert, der in dem hier gezeigten Ausführungsbeispiel (Fig. 5) das zweite Feststellbremssignal SF2 verkörpert. Zum Bereitstellen des zweiten Steuerdrucks p2 ist eine zweite Vorsteuereinheit 120 vorgesehen. Die zweite Vorsteuereinheit 120 wird von einer zweiten elektronischen Steuereinheit ECU2 angesteuert, hier durch ein viertes Schaltsignal S4. Die zweite Vorsteuereinheit 120 ist hier bistabil ausgebildet, nämlich vorzugsweise elektromagnetisch bistabil, und umfasst ein weiteres Bistabilventil 122 mit einem weiteren ersten Bistabilventilanschluss 122.1, einem weiteren zweiten Bistabilventilanschluss 122.2 und einem weiteren dritten Bistabilventilanschluss 122.3. Der weitere erste Bistabilventilanschluss 122.1 ist mit dem Feststellbrems-Vorratsanschluss 6 verbunden und empfängt Vorratsdruck von diesem. Der weitere zweite Bistabilventilanschluss 122.2 ist mit der zweiten Feststellbremsventileinheit 4 verbunden und stellt den zweiten Steuerdruck p2 an dieser bereit. Der weitere dritte Bistabilventilanschluss 122.3 ist mit der Entlüftung 3 verbunden. Durch wechselweises Schalten des weiteren Bistabilventils 122 kann demnach der zweite Steuerdruck p2 bereitgestellt oder entlüftet werden.

In dem in Fig. 5 gezeigten Ausführungsbeispiel ist ferner ein dritter und ein vierter Drucksensor 163, 164 vorgesehen, die beide den am Feststellbrems-Arbeitsanschluss 8 ausgesteuerten Druck erfassen und entsprechend diesen repräsentierende dritte und vierte Drucksignale SD3, SD4 an der ersten elektronischen Steuereinheit ECU1 bzw. der zweiten elektronischen Steuereinheit ECU2 bereitstellen.

Auch wenn das Feststellbremsmodul 100 hier als eine Baueinheit gebildet ist, soll verstanden werden, dass die einzelnen Subgruppen, umfassend in einer ersten Subgruppe die erste elektronische Steuereinheit ECU1, die erste Vorsteuereinheit 110 sowie die erste Feststellbremsventileinheit 2 samt dem ersten und dritten Drucksensor 160, 163 eine Baueinheit bilden kann und eine zweite Subgruppe umfassend die zweite elektronische Steuereinheit ECU2, die zweite Vorsteuereinheit 120, die zweite Feststellbremsventileinheit 4 sowie den vierten Drucksensor 164 eine zweite eigenständige Baueinheit bilden kann.

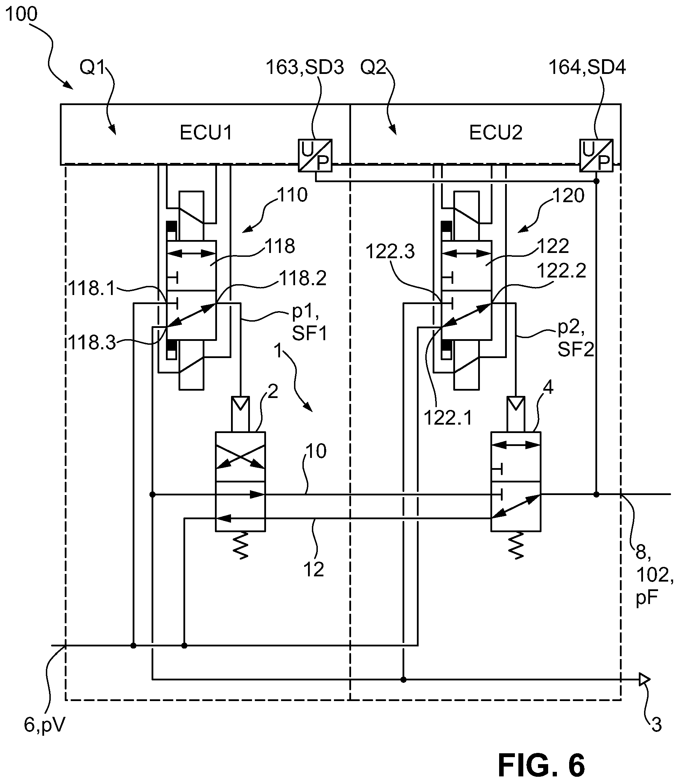

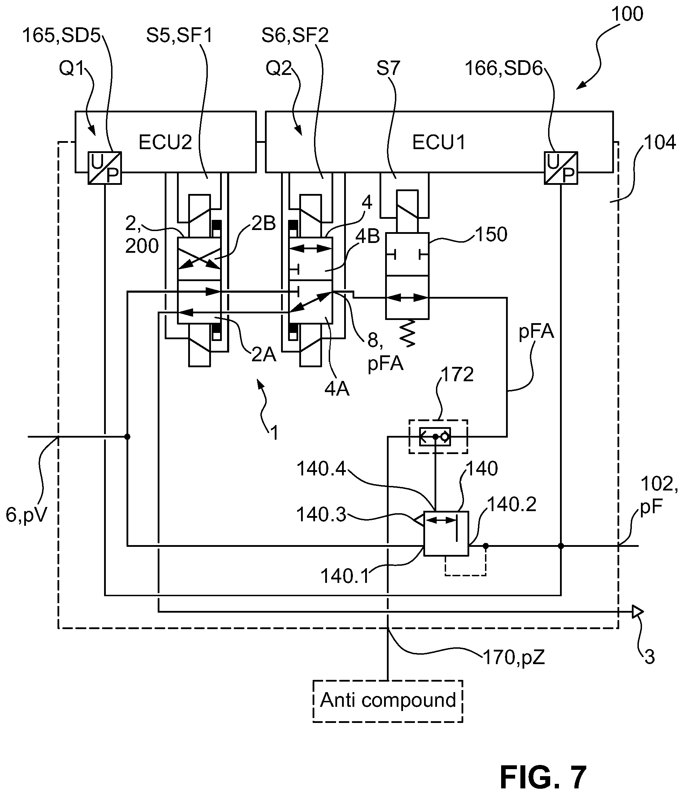

Das in Fig. 6 gezeigte Ausführungsbeispiel basiert auf dem in Fig. 4 und in Fig. 5 gezeigten Ausführungsbeispiel, wobei gleiche und ähnliche Elemente mit gleichen Bezugszeichen versehen sind, sodass vollumfänglich auf die obige Beschreibung Bezug genommen wird. In dem in Fig. 6 gezeigten Ausführungsbeispiel ist für die erste Feststellbremsventileinheit 2 die erste Vorsteuereinheit 110 vorgesehen, die hier gemäß Fig. 4 mit dem Bistabilventil 118 ausgebildet ist und für die zweite Feststellbremsventileinheit 4 ist die zweite Vorsteuereinheit 120 vorgesehen, die mit dem weiteren Bistabilventil 122 gemäß Fig. 5 versehen ist. Den Ausführungsbeispielen gemäß den Fig. 3 bis 6 ist gemein, dass die zweite Feststellbremsventileinheit 4 jeweils unmittelbar mit dem Federspeicheranschluss 102 verbunden ist und somit der Feststellbrems-Arbeitsanschluss 8 den Federspeicheranschluss 102 bildet oder mit diesem unmittelbar verbunden ist. In den nun zu beschreibenden Ausführungsbeispielen der Fig. 7 bis 9 ist jeweils ein Relaisventil 140 vorgesehen, welches zwischen den Feststellbrems-Arbeitsanschluss 8 und den Federspeicheranschluss 102 geschaltet ist, und so den Feststellbrems-Arbeitsdruck pFA volumenverstärkt und diesen dann als Feststellbremsdruck pF aussteuert.

Das in Fig. 7 gezeigte Feststellbremsmodul 100 umfasst als zusätzliche Besonderheit die bereits aus Fig. 1 bekannte Feststellbremsventilanordnung 1, wobei jedoch das 4/2-Wege-Ventil 200, das die erste Feststellbremsventileinheit 2 bildet, bistabil ausgebildet ist und somit durch Bereitstellen eines fünften Schaltsignals, welches von der zweiten elektronischen Steuereinheit ECU2 bereitgestellt werden kann, zwischen den ersten und zweiten Schaltstellungen 2A, 2B elektromagnetisch bistabil hin- und hergeschaltet werden kann. Das fünfte Schaltsignal S5 bildet also hier das erste Feststellbremssignal SF1. Ebenso ist auch das 3/2-Wege-Ventil, das die zweite Feststellbremsventileinheit 4 bildet, bistabil ausgebildet, ebenfalls elektromagnetisch bistabil, und kann durch ein sechstes Schaltsignal S6 zwischen der ersten und zweiten Schaltstellung 4A, 4B hin- und hergeschaltet werden, sodass das sechste Schaltsignal, das von der ersten elektronischen Steuereinheit ECU1 bereitgestellt wird, das zweite Feststellbremssignal SF2 verkörpert. Die ersten und zweiten Feststellbremssignale SF1, SF2 sind in der hier gezeigten Ausführungsform (Fig. 7) also elektrisch. Das Relaisventil 140 ist gemäß üblichen Relaisventilen ausgebildet und hat an einen Relaisventilvorratsanschluss 140.1, der mit dem Feststellbrems-Vorratsanschluss 6 verbunden ist und Vorratsdruck pV empfängt, einen Relaisventil-Arbeitsanschluss 140.2, der mit dem Federspeicheranschluss 102 verbunden ist und den Feststellbremsdruck pF aussteuert, einen Relaisventil-Entlüftungsanschluss 140.3, der mit einer Entlüftung verbunden ist sowie einen Relaisventil-Steueranschluss 140.4, der den Feststellbrems-Arbeitsdruck pFA empfängt.

Als weiterer Unterschied zu den vorherigen Ausführungsbeispielen ist ein Halteventil 150 vorgesehen, welches zwischen der Feststellbremsventilanordnung 1 und dem Relaisventil 140 angeordnet ist, zum Ein- bzw. Aussperren des Feststellbrems-Arbeitsdrucks pFA. Ist der Feststellbrems-Arbeitsdruck pFA einmal ausgesteuert, kann das Halteventil 150 in die in Fig. 7 nicht gezeigte Schaltstellung verbracht werden, durch Bereitstellen eines siebten Schaltsignals S7, sodass das Halteventil 150 dann in der geschlossenen in Fig. 7 nicht gezeigten Schaltstellung ist und der Feststellbrems-Arbeitsdruck pFA an dem Relaisventil-Steueranschluss 140.4 eingesperrt wird. In der Folge wird der Feststellbremsdruck pF ausgesteuert, unabhängig von den Schaltstellungen der ersten und zweiten Feststellbremsventileinheiten 2, 4.

Als weitere Besonderheit umfasst das Feststellbremsmodul 100 in der hier gezeigten Ausführungsform einen Anti-Compound-Anschluss 170, wie im Grunde im Stand der Technik bekannt. An dem Anti-Compound-Anschluss 170 kann ein Lösedruck pZ ausgesteuert werden, insbesondere manuell. Um entweder den Lösedruck pZ oder den Feststellbrems-Arbeitsdruck pFA an dem Relaisventil-Steueranschluss 140.4 auszusteuern, ist ferner ein Wechselventil vorgesehen, welches als Select-High-Ventil ausgebildet ist, um jeweils den höheren des Lösedrucks pZ und des Feststellbrems-Arbeitsdrucks pFA an dem Relaisventil-Steueranschluss 140.4 auszusteuern.

Ferner sind hier ein fünfter und sechster Drucksensor 165, 166 vorgesehen, wobei der fünfte Drucksensor ein fünftes Drucksignal SD5 an der zweiten elektronischen Steuereinheit ECU2 bereitstellt und der sechste Drucksensor 166 ein sechstes Drucksignal SD6 an der ersten elektronischen Steuereinheit ECU1 bereitstellt, die jeweils den Feststellbremsdruck pF repräsentieren.

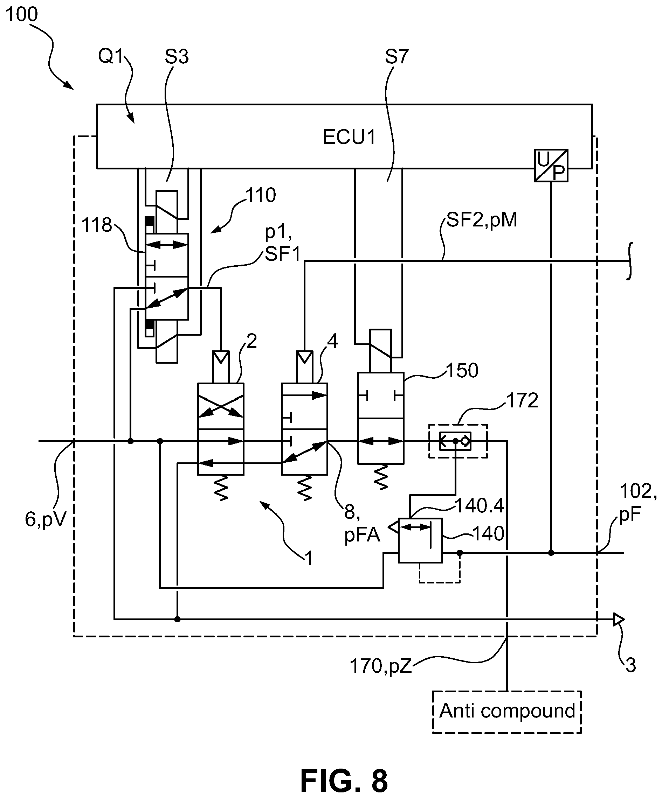

Das in Fig. 8 gezeigte Ausführungsbeispiel stellt eine Mischung des Ausführungsbeispiels gemäß Fig. 7 und Fig. 4 dar. Die Feststellbremsventilanordnung 1 entspricht zunächst der gemäß Fig. 4, wobei auch für die erste Feststellbremsventileinheit 2 die erste Vorsteuereinheit 110 mit dem Bistabilventil 118 vorgesehen ist, welches über das dritte Schaltsignal S3 von der ersten elektronischen Steuereinheit ECU1 angesteuert wird. Die zweite Feststellbremsventileinheit 4 wird wiederum über einen manuellen Druck pM angesteuert, welcher beispielsweise von einem Handventil 130 bereitgestellt werden kann oder von einer anderen Einheit. Der Feststellbremsventilanordnung 1 nachgeschaltet sind allerdings das Halteventil 150, das Wechselventil 172 sowie das Relaisventil 140, wie mit Bezug auf Fig. 7 beschrieben. Gleiche und ähnliche Elemente sind mit gleichen Bezugszeichen versehen, sodass auf die obige Beschreibung vollumfänglich Bezug genommen wird.

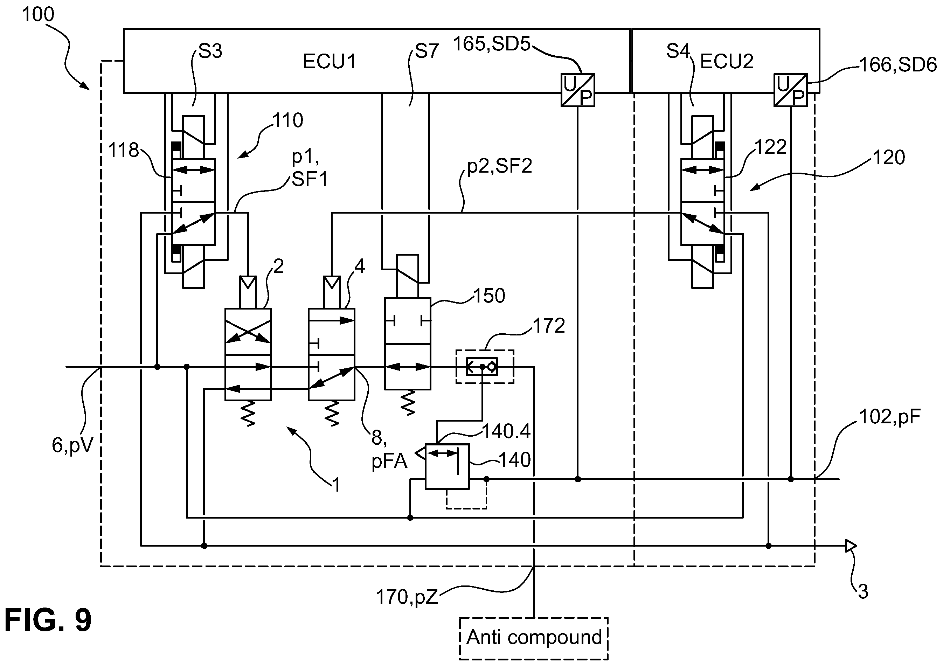

Das in Fig. 9 gezeigte Ausführungsbeispiel basiert im Wesentlichen auf dem in Fig. 8 gezeigten Ausführungsbeispiel, wobei das zweite Feststellbremssignal SF2 nicht durch den manuellen Druck pM, sondern durch den zweiten Steuerdruck p2, wie aus Fig. 5 bekannt, gebildet wird. Ebenso wie aus Fig. 5 bekannt wird der zweite Steuerdruck p2 durch das weitere Bistabilventil 122 bereitgestellt, welches Teil der zweiten Vorsteuereinheit 120 ist und durch das vierte Schaltsignal S4 von der zweiten elektronischen Steuereinheit ECU2 angesteuert wird. Gleiche und ähnliche Elemente sind wiederum mit gleichen Bezugszeichen versehen, sodass vollumfänglich auf die obige Beschreibung Bezug genommen wird.

### BEZUGSZEICHENLISTE (Teil der Beschreibung)

- 1: Feststellbremsventilanordnung
- 2: erste Feststellbremsventileinheit
- 2.1: erster Feststellbremsventilanschluss
- 2.2: zweiter Feststellbremsventilanschluss
- 2.3: dritter Feststellbremsventilanschluss
- 2.4: vierter Feststellbremsventilanschluss
- 2A: erster Schaltstellung
- 2B: zweite Schaltstellung
- 3: Entlüftung
- 4: zweite Feststellbremsventileinheit
- 4.1: fünfter Feststellbremsventilanschluss
- 4.2: sechster Feststellbremsventilanschluss
- 4.3: siebter Feststellbremsventilanschluss
- 4A: erste Schaltstellung
- 4B: zweite Schaltstellung
- 6: Feststellbrems-Vorratsanschluss
- 8: Feststellbrems-Arbeitsanschluss
- 10: erste Ventilleitung
- 12: zweite Ventilleitung
- 14: erstes Schaltventil
- 14.1: erster Schaltventilanschluss
- 14.2: zweiter Schaltventilanschluss
- 14.3: dritter Schaltventilanschluss
- 16: zweites Schaltventil
- 16.1: vierter Schaltventilanschluss
- 16.2: fünfter Schaltventilanschluss
- 16.3: sechster Schaltventilanschluss
- 100: Feststellbremsmodul
- 102: Federspeicheranschluss
- 104: Gehäuse
- 110: erste Vorsteuereinheit
- 112: Einlass-Auslass-Ventileinheit
- 113: Einlassventil
- 113.1: erster Einlassventilanschluss
- 113.2: zweiter Einlassventilanschluss
- 114: Auslassventil
- 114.1: erster Auslassventilanschluss
- 114.2: zweiter Auslassventilanschluss
- 114.3: dritter Auslassventilanschluss
- 118: Bistabilventil
- 118.1: erster Bistabilventilanschluss
- 118.2: zweiter Bistabilventilanschluss
- 118.3: dritter Bistabilventilanschluss
- 120: zweite Vorsteuereinheit
- 122: weiteres Bistabilventil
- 122.1: weiterer erster Bistabilventilanschluss
- 122.2: weiterer zweiter Bistabilventilanschluss
- 122.3: weiterer dritter Bistabilventilanschluss
- 130: Handventil
- 130.1: erster Handventilanschluss
- 130.2: zweiter Handventilanschluss
- 130.3: dritter Handventilanschluss
- 140: Relaisventil
- 140.1: Relaisventil-Vorratsanschluss
- 140.2: Relaisventil-Arbeitsanschluss
- 140.3: Relaisventil-Entlüftungsanschluss
- 140.4: Relaisventil-Steueranschluss
- 160: erster Drucksensor
- 162-166: zweiter bis sechster Drucksensor
- 170: Anti-Compound-Anschluss
- 172: Wechselventil
- 200: 4/2-Wege-Ventil
- 202: 3/2-Wege-Ventil
- ECU1: erste elektronische Steuereinheit
- ECU2: zweite elektronische Steuereinheit
- p1: erster Steuerdruck
- p2: zweiter Steuerdruck
- pF: Feststellbremsdruck
- pFA: Feststellbrems-Arbeitsdruck
- pM: manueller Druck
- pV: Vorratsdruck
- Q1: erste Signalquelle
- Q2: zweite Signalquelle
- S1-S7: erstes bis siebtes Schaltsignal
- SD1-SD6: erstes bis sechstes Drucksignal
- SF1: erstes Feststellbremssignal
- SF2: zweites Feststellbremssignal

## Patentansprüche

1. Feststellbremsventilanordnung (1) für ein pneumatisches Bremssystem eines Nutzfahrzeugs, mit
wenigstens einer ersten Feststellbremsventileinheit (2) und
wenigstens einer zweiten Feststellbremsventileinheit (4),
wobei die erste Feststellbremsventileinheit (2) durch ein erstes Feststellbremssignal (SF1) angesteuert und von einer ersten Schaltstellung (2A) in eine zweite Schaltstellung (2B) schaltbar ist, und
die zweite Feststellbremsventileinheit (4) durch ein zweites Feststellbremssignal (SF2) angesteuert und von einer ersten Schaltstellung (4A) in eine zweite Schaltstellung (4B) schaltbar ist,
wobei das erste Feststellbremssignal (SF1) und das zweite Feststellbremssignal (SF2) unabhängig voneinander sind, und
wobei die erste Feststellbremsventileinheit (2) und die zweite Feststellbremsventileinheit (4) zwischen einem Feststellbrems-Vorratsanschluss (6) und einem Feststellbrems-Arbeitsanschluss (8) derart pneumatisch in Reihe geschaltet sind, dass der Feststellbrems-Arbeitsanschluss (8) unabhängig von der Schaltstellung (2A, 2B, 4A, 4B) der einen Feststellbremsventileinheit (2, 4) durch Schalten der jeweils anderen Feststellbremsventileinheit (2, 4) sowohl belüftet als auch entlüftet werden kann.

2. Feststellbremsventilanordnung (1) nach Anspruch 1, wobei die erste Feststellbremsventileinheit (2) mit dem Feststellbrems-Vorratsanschluss (6) verbunden ist und Vorratsdruck (pV) von diesem empfängt.

3. Feststellbremsventilanordnung (1) nach Anspruch 1 oder 2, wobei die zweite Feststellbremsventileinheit (4) mit dem Feststellbrems-Arbeitsanschluss (8) verbunden ist und einen Feststellbrems-Arbeitsdruck (pFA) an diesem aussteuert.

4. Feststellbremsventilanordnung (1) nach einem der vorstehenden Ansprüche, wobei das erste Feststellbremssignal (SF1) von einer ersten Signalquelle (Q1) und das zweite Feststellbremssignal (SF2) von einer zweiten Signalquelle (Q2) bereitgestellt wird, wobei die erste Signalquelle (Q1) und die zweite Signalquelle (Q2) unabhängig voneinander sind, insbesondere aus zwei unabhängigen Spannungsquellen versorgt werden.

5. Feststellbremsventilanordnung (1) nach einem der vorstehenden Ansprüche, wobei die erste Feststellbremsventileinheit (2) und die zweite Feststellbremsventileinheit (4) zur Realisierung einer Wechselschaltungsfunktion über eine erste Ventilleitung (10) und eine davon separate zweite Ventilleitung (12) miteinander verbunden sind.

6. Feststellbremsventilanordnung (1) nach Anspruch 5, wobei mittels der ersten Feststellbremsventileinheit (2) wahlweise die erste Ventilleitung (10) oder die zweite Ventilleitung (12) mit Vorratsdruck (pV) beaufschlagt und entlüftet werden kann.

7. Feststellbremsventilanordnung (1) nach Anspruch 5 oder 6, wobei mittels die zweiten Feststellbremsventileinheit (4) wahlweise die erste Ventilleitung (10) oder die zweite Ventilleitung (12) mit dem Feststellbrems-Arbeitsanschluss (8) verbunden werden kann.

8. Feststellbremsventilanordnung (1) nach einem der vorstehenden Ansprüche, wobei die erste Feststellbremsventileinheit (2) ein 4/2-Wege-Ventil (200) ist, mit einem ersten Feststellbremsventilanschluss (2.1), einem zweiten Feststellbremsventilanschluss (2.2), einem dritten Feststellbremsventilanschluss (2.3) und einem vierten Feststellbremsventilanschluss (2.4),
wobei in der ersten Schaltstellung (2A) der erste Feststellbremsventilanschluss (2.1) mit dem zweiten Feststellbremsventilanschluss (2.2), und der dritte Feststellbremsventilanschluss (2.3) mit dem vierten Feststellbremsventilanschluss (2.4) verbunden ist, und
in der zweiten Schaltstellung (2B) der erste Feststellbremsventilanschluss (2.1) mit dem vierten Feststellbremsventilanschluss (2.4), und der dritte Feststellbremsventilanschluss (2.3) mit dem zweiten Feststellbremsventilanschluss (2.2) verbunden ist.

9. Feststellbremsventilanordnung (1) nach einem der vorstehenden Ansprüche 1 bis 7, wobei die erste Feststellbremsventileinheit (2) ein erstes Schaltventil (14) und ein zweites Schaltventil (16) umfasst, die jeweils als 3/2-Wege-Ventil ausgebildet sind, wobei sowohl das erste Schaltventil (14) als auch das zweite Schaltventil (16) mittels des ersten Feststellbremssignals (SF1) angesteuert werden.

10. Feststellbremsventilanordnung (1) nach einem der vorstehenden Ansprüche, wobei die zweite Feststellbremsventileinheit (4) ein 3/2-Wege-Ventil (202) ist, mit einem fünften Feststellbremsventilanschluss (4.1), einem sechsten Feststellbremsventilanschluss (4.2) und einem siebten Feststellbremsventilanschluss (4.3), wobei in der ersten Schaltstellung (4A) der fünfte Feststellbremsventilanschluss (4.1) mit dem sechsten Feststellbremsventilanschluss (4.2), und in der zweiten Schaltstellung (4B) der siebte Feststellbremsventilanschluss (4.3) mit dem sechsten Feststellbremsventilanschluss (4.2) verbunden ist.

11. Feststellbremsventilanordnung (1) nach einem der vorstehenden Ansprüche, wobei das erste Feststellbremssignal (SF1) pneumatisch oder elektrisch ist und/oder das zweite Feststellbremssignal (SF2) pneumatisch oder elektrisch ist.

12. Feststellbremsventilanordnung (1) nach einem der vorstehenden Ansprüche, wobei die erste Feststellbremsventileinheit (2) und/oder die zweite Feststellbremsventileinheit (4) bistabil ausgebildet ist.

13. Feststellbremsmodul (100) für ein pneumatisches Bremssystem eines Nutzfahrzeugs, mit
einem Feststellbrems-Vorratsanschluss (6) zum Empfangen von Vorratsdruck (pV),
einem Federspeicheranschluss (102) zum Bereitstellen eines Feststellbremsdrucks (pF), und
einer Feststellbremsventilanordnung (1) nach einem der Ansprüche 1 bis 12.

14. Feststellbremsmodul (100) nach Anspruch 13, aufweisend eine erste Vorsteuereinheit (110), die mit dem Feststellbrems-Vorratsanschluss (6) verbunden ist und von diesem Vorratsdruck (pV) empfängt, wobei die erste Vorsteuereinheit (110) schaltbar ist, um einen ersten Steuerdruck (p1) auszusteuern, wobei der erste Steuerdruck (p1) zum Schalten wenigstens der ersten Feststellbremsventileinheit (2) als erstes Feststellbremssignal (SF1) an diesem ausgesteuert wird.

15. Feststellbremsmodul (100) nach Anspruch 13 oder 14, aufweisend eine zweite Vorsteuereinheit (120), die mit dem Feststellbrems-Vorratsanschluss (6) verbunden ist und von diesem Vorratsdruck (pV) empfängt, wobei die zweite Vorsteuereinheit (120) schaltbar ist, um einen zweiten Steuerdruck (p1) auszusteuern, wobei der zweite Steuerdruck (p2) zum Schalten wenigstens der zweiten Feststellbremsventileinheit (4) als zweites Feststellbremssignal (SF2) an diesem ausgesteuert wird.

16. Feststellbremsmodul (100) nach Anspruch 14, aufweisend eine erste elektronische Steuereinheit (ECU1) zum Ansteuern der ersten Vorsteuereinheit (110).

17. Feststellbremsmodul (100) nach Anspruch 15, aufweisend eine zweite elektronische Steuereinheit (ECU2) zum Ansteuern der zweiten Vorsteuereinheit (120).

18. Feststellbremsmodul (100) nach einem der Ansprüche 13 bis 17, wobei das erste Feststellbremssignal (SF1) oder das zweite Feststellbremssignal (SF2) ein manueller pneumatischer Druck (pM) eines Handventils (130) ist.

19. Feststellbremsmodul (100) nach einem der Ansprüche 13 bis 18, aufweisend ein Relaisventil (140), welches mit dem Feststellbrems-Vorratsanschluss (6) zum Empfang von Vorratsdruck (pV) verbunden ist, und welches mit der Feststellbremsventilanordnung (1) verbunden ist und an einem Steueranschluss (140.4) von der Feststellbremsventilanordnung (1) den Feststellbrems-Arbeitsdruck (pFA) empfängt und in Antwort auf den Empfang des Feststellbrems-Arbeitsdrucks (pFA) den Feststellbremsdruck (pF) an dem Federspeicheranschluss (8) aussteuert.

20. Feststellbremsmodul (100) nach Anspruch 19, aufweisend ein Halteventil (150), welches zwischen der Feststellbremsventilanordnung (1) und dem Relaisventil (140) angeordnet ist, zum Ein- bzw. Aussperren des Feststellbrems-Arbeitsdrucks (pFA).

21. Nutzfahrzeug mit einem elektronisch steuerbaren pneumatischen Bremssystem und einem Feststellbremsmodul (100) nach einem der Ansprüche 13 bis 20.

22. Anhänger mit einem elektronisch steuerbaren Anhängerbremssystem und einem Feststellbremsmodul (100) nach einem der Ansprüche 13 bis 20.

## Claims

1. Parking brake valve assembly (1) for a pneumatic brake system of a commercial vehicle, comprising
at least one first parking brake valve unit (2) and
at least one second parking brake valve unit (4),
the first parking brake valve unit (2) being controlled by a first parking brake signal (SF1) and being switchable from a first switching position (2A) to a second switching position (2B), and
the second parking brake valve unit (4) being controlled by a second parking brake signal (SF2) and being switchable from a first switching position (4A) to a second switching position (4B),
the first parking brake signal (SF1) and the second parking brake signal (SF2) being independent of one another, and
**characterized in that**
the first parking brake valve unit (2) and the second parking brake valve unit (4) are pneumatically connected in series between a parking brake supply terminal (6) and a parking brake working terminal (8) in such a way that the parking brake working terminal (8) can be both ventilated and vented, independently of the switching position (2A, 2B, 4A, 4B) of one parking brake valve unit (2, 4), by switching the relevant other parking brake valve unit (2, 4).

2. Parking brake valve assembly (1) according to claim 1, wherein the first parking brake valve unit (2) is connected to the parking brake supply terminal (6) and receives supply pressure (pV) therefrom.

3. Parking brake valve assembly (1) according to claim 1 or claim 2, wherein the second parking brake valve unit (4) is connected to the parking brake working terminal (8) and modulates a parking brake working pressure (pFA) at said terminal.

4. Parking brake valve assembly (1) according to any of the preceding claims, wherein the first parking brake signal (SF1) is provided by a first signal source (Q1) and the second parking brake signal (SF2) is provided by a second signal source (Q2), wherein the first signal source (Q1) and the second signal source (Q2) are independent of one another, in particular are supplied from two independent voltage sources.

5. Parking brake valve assembly (1) according to any of the preceding claims, wherein, in order to implement a changeover switching function, the first parking brake valve unit (2) and the second parking brake valve unit (4) are connected to one another via a first valve line (10) and a second valve line (12) which is separate therefrom.

6. Parking brake valve assembly (1) according to claim 5, wherein, by means of the first parking brake valve unit (2), selectively the first valve line (10) or the second valve line (12) can be pressurized with supply pressure (pV) and vented.

7. Parking brake valve assembly (1) according to claim 5 or claim 6, wherein, by means of the second parking brake valve unit (4), selectively the first valve line (10) or the second valve line (12) can be connected to the parking brake working terminal (8).

8. Parking brake valve assembly (1) according to any of the preceding claims, wherein the first parking brake valve unit (2) is a 4/2-way valve (200) comprising a first parking brake valve terminal (2.1), a second parking brake valve terminal (2.2), a third parking brake valve terminal (2.3) and a fourth parking brake valve terminal (2.4),
wherein in the first switching position (2A), the first parking brake valve terminal (2.1) is connected to the second parking brake valve terminal (2.2), and the third parking brake valve terminal (2.3) is connected to the fourth parking brake valve terminal (2.4), and
in the second switching position (2B), the first parking brake valve terminal (2.1) is connected to the fourth parking brake valve terminal (2.4), and the third parking brake valve terminal (2.3) is connected to the second parking brake valve terminal (2.2).

9. Parking brake valve assembly (1) according to any of the preceding claims 1 to 7, wherein the first parking brake valve unit (2) comprises a first switching valve (14) and a second switching valve (16), each of which is designed as a 3/2-way valve, wherein both the first switching valve (14) and the second switching valve (16) are controlled by means of the first parking brake signal (SF1).

10. Parking brake valve assembly (1) according to any of the preceding claims, wherein the second parking brake valve unit (4) is a 3/2-way valve (202) comprising a fifth parking brake valve terminal (4.1), a sixth parking brake valve terminal (4.2) and a seventh parking brake valve terminal (4.3), wherein in the first switching position (4A), the fifth parking brake valve terminal (4.1) is connected to the sixth parking brake valve terminal (4.2), and in the second switching position (4B), the seventh parking brake valve terminal (4.3) is connected to the sixth parking brake valve terminal (4.2).

11. Parking brake valve assembly (1) according to any of the preceding claims, wherein the first parking brake signal (SF1) is pneumatic or electric and/or the second parking brake signal (SF2) is pneumatic or electric.

12. Parking brake valve assembly (1) according to any of the preceding claims, wherein the first parking brake valve unit (2) and/or the second parking brake valve unit (4) is of bistable design.

13. Parking brake module (100) for a pneumatic brake system of a commercial vehicle, comprising
a parking brake supply terminal (6) for receiving supply pressure (pV),
a spring-loaded terminal (102) for providing a parking brake pressure (pF), and
a parking brake valve assembly (1) according to any of claims 1 to 12.

14. Parking brake module (100) according to claim 13, comprising a first pilot control unit (110) which is connected to the parking brake supply terminal (6) and receives supply pressure (pV) therefrom, wherein the first pilot control unit (110) is switchable in order to modulate a first control pressure (p1), wherein the first control pressure (p1) for switching at least the first parking brake valve unit (2) is modulated as a first parking brake signal (SF1) thereat.

15. Parking brake module (100) according to claim 13 or claim 14, comprising a second pilot control unit (120) which is connected to the parking brake supply terminal (6) and receives supply pressure (pV) therefrom, wherein the second pilot control unit (120) is switchable in order to modulate a second control pressure (p1), wherein the second control pressure (p2) for switching at least the second parking brake valve unit (4) is modulated as a second parking brake signal (SF2) thereat.

16. Parking brake module (100) according to claim 14, comprising a first electronic control unit (ECU1) for controlling the first pilot control unit (110).

17. Parking brake module (100) according to claim 15, comprising a second electronic control unit (ECU2) for controlling the second pilot control unit (120).

18. Parking brake module (100) according to any of claims 13 to 17, wherein the first parking brake signal (SF1) or the second parking brake signal (SF2) is a manual pneumatic pressure (pM) of a hand valve (130).

19. Parking brake module (100) according to any of claims 13 to 18, comprising a relay valve (140) which is connected to the parking brake supply terminal (6) for receiving supply pressure (pV), and which is connected to the parking brake valve assembly (1) and receives, at a control terminal (140.4), the parking brake working pressure (pFA) from the parking brake valve assembly (1) and, in response to receiving the parking brake working pressure (pFA), modulates the parking brake pressure (pF) at the spring-loaded terminal (8).

20. Parking brake module (100) according to claim 19, comprising a holding valve (150) for locking in or locking out the parking brake working pressure (pFA), which holding valve is arranged between the parking brake valve assembly (1) and the relay valve (140).

21. Commercial vehicle comprising an electronically controllable pneumatic brake system and a parking brake module (100) according to any of claims 13 to 20.

22. Trailer comprising an electronically controllable trailer brake system and a parking brake module (100) according to any of claims 13 to 20.

## Revendications

1. Ensemble à soupapes de frein de stationnement (1) pour un système de frein pneumatique d'un véhicule utilitaire, comportant
au moins une première unité formant soupape de frein de stationnement (2), et
au moins une seconde unité formant soupape de frein de stationnement (4),
dans lequel la première unité formant soupape de frein de stationnement (2) est commandée par un premier signal de frein de stationnement (SF1) et peut être commutée d'une première position de commutation (2A) à une seconde position de commutation (2B), et
la seconde unité formant soupape de frein de stationnement (4) est commandée par un second signal de frein de stationnement (SF2) et peut être commutée d'une première position de commutation (4A) à une seconde position de commutation (4B),
dans lequel le premier signal de frein de stationnement (SF1) et le second signal de frein de stationnement (SF2) sont indépendants l'un de l'autre, et
**caractérisé en ce que**
la première unité formant soupape de frein de stationnement (2) et la seconde unité formant soupape de frein de stationnement (4) sont raccordées pneumatiquement en série entre un raccord de réserve de frein de stationnement (6) et un raccord de travail de frein de stationnement (8) de telle sorte que le raccord de travail de frein de stationnement (8) peut aussi bien être ventilé que purgé, indépendamment de la position de commutation (2A, 2B, 4A, 4B) de l'une des unités formant soupapes de frein de stationnement (2, 4), par la commutation de l'autre unité formant soupape de frein de stationnement (2, 4) respective.

2. Ensemble à soupapes de frein de stationnement (1) selon la revendication 1, dans lequel la première unité formant soupape de frein de stationnement (2) est raccordée au raccord de réserve de frein de stationnement (6) et reçoit une pression de réserve (pV) de celui-ci.

3. Ensemble à soupapes de frein de stationnement (1) selon la revendication 1 ou 2, dans lequel la seconde unité formant soupape de frein de stationnement (4) est raccordée au raccord de travail de frein de stationnement (8) et commande une pression de travail de frein de stationnement (pFA) au niveau de celui-ci.

4. Ensemble à soupapes de frein de stationnement (1) selon l'une des revendications précédentes, dans lequel le premier signal de frein de stationnement (SF1) est fourni par une première source de signal (Q1) et le second signal de frein de stationnement (SF2) est fourni par une seconde source de signal (Q2), dans lequel la première source de signal (Q1) et la seconde source de signal (Q2) sont indépendantes l'une de l'autre, en particulier sont alimentées par deux sources de tension indépendantes.

5. Ensemble à soupapes de frein de stationnement (1) selon l'une des revendications précédentes, dans lequel la première unité formant soupape de frein de stationnement (2) et la seconde unité formant soupape de frein de stationnement (4) sont raccordées entre elles pour la réalisation d'une fonction de commutation de changement par l'intermédiaire d'une première conduite de soupape (10) et d'une seconde conduite de soupape (12) séparée de celle-ci.

6. Ensemble à soupapes de frein de stationnement (1) selon la revendication 5, dans lequel, au moyen de la première unité formant soupape de frein de stationnement (2), au choix, la première conduite de soupape (10) ou la seconde conduite de soupape (12) peut être alimentée en pression de réserve (pV) et purgée.

7. Ensemble à soupapes de frein de stationnement (1) selon la revendication 5 ou 6, dans lequel, au choix, la première conduite de soupape (10) ou la seconde conduite de soupape (12) peut être raccordée au raccord de travail de frein de stationnement (8) au moyen de la seconde unité formant soupape de frein de stationnement (4).

8. Ensemble à soupapes de frein de stationnement (1) selon l'une des revendications précédentes, dans lequel la première unité formant soupape de frein de stationnement (2) est une soupape à 4/2 voies (200) comportant un premier raccord de soupape de frein de stationnement (2.1), un deuxième raccord de soupape de frein de stationnement (2.2), un troisième raccord de soupape de frein de stationnement (2.3) et un quatrième raccord de soupape de frein de stationnement (2.4),
dans lequel, dans la première position de commutation (2A), le premier raccord de soupape de frein de stationnement (2.1) est raccordé au deuxième raccord de soupape de frein de stationnement (2.2), et le troisième raccord de soupape de frein de stationnement (2.3) est raccordé au quatrième raccord de soupape de frein de stationnement (2.4), et
dans la seconde position de commutation (2B), le premier raccord de soupape de frein de stationnement (2.1) est raccordé au quatrième raccord de soupape de frein de stationnement (2.4), et le troisième raccord de soupape de frein de stationnement (2.3) est raccordé au deuxième raccord de soupape de frein de stationnement (2.2).

9. Ensemble à soupapes de frein de stationnement (1) selon l'une des revendications précédentes 1 à 7, dans lequel la première unité formant soupape de frein de stationnement (2) comprend une première soupape de commutation (14) et une seconde soupape de commutation (16), lesquelles sont respectivement réalisées sous forme de soupapes à 3/2 voies, dans lequel tant la première soupape de commutation (14) que la seconde soupape de commutation (16) sont commandées au moyen du premier signal de frein de stationnement (SF1).

10. Ensemble à soupapes de frein de stationnement (1) selon l'une des revendications précédentes, dans lequel la seconde unité formant soupape de frein de stationnement (4) est une soupape à 3/2 voies (202) comportant un cinquième raccord de soupape de frein de stationnement (4.1), un sixième raccord de soupape de frein de stationnement (4.2) et un septième raccord de soupape de frein de stationnement (4.3), dans lequel, dans la première position de commutation (4A), le cinquième raccord de soupape de frein de stationnement (4.1) est raccordé au sixième raccord de soupape de frein de stationnement (4.2) et, dans la seconde position de commutation (4B), le septième raccord de soupape de frein de stationnement (4.3) est raccordé au sixième raccord de soupape de frein de stationnement (4.2).

11. Ensemble à soupapes de frein de stationnement (1) selon l'une des revendications précédentes, dans lequel le premier signal de frein de stationnement (SF1) est pneumatique ou électrique et/ou le second signal de frein de stationnement (SF2) est pneumatique ou électrique.

12. Ensemble à soupapes de frein de stationnement (1) selon l'une des revendications précédentes, dans lequel la première unité formant soupape de frein de stationnement (2) et/ou la seconde unité formant soupape de frein de stationnement (4) sont réalisées de manière bistable.

13. Module de frein de stationnement (100) pour un système de frein pneumatique d'un véhicule utilitaire, comportant
un raccord de réserve de frein de stationnement (6) pour la réception d'une pression de réserve (pV),
un raccord d'accumulateur à ressort (102) pour la fourniture d'une pression de frein de stationnement (pF), et
un ensemble à soupapes de frein de stationnement (1) selon l'une des revendications 1 à 12.

14. Module de frein de stationnement (100) selon la revendication 13, présentant une première unité pilote (110) connectée au raccord de réserve de frein de stationnement (6) et recevant une pression de réserve (pV) de celui-ci, dans lequel la première unité pilote (110) peut être commutée pour commander une première pression de commande (p1), dans lequel la première pression de commande (p1) est commandée pour commuter au moins la première unité formant soupape de frein de stationnement (2) en tant que premier signal de frein de stationnement (SF1) sur celle-ci.

15. Module de frein de stationnement (100) selon la revendication 13 ou 14, présentant une seconde unité pilote (120) connectée au raccord de réserve de frein de stationnement (6) et recevant une pression de réserve (pV) de celui-ci, dans lequel la seconde unité pilote (120) peut être commutée pour commander une seconde pression de commande (p1), dans lequel la seconde pression de commande (p2) est commandée pour commuter au moins la seconde unité formant soupape de frein de stationnement (4) en tant que second signal de frein de stationnement (SF2) sur celle-ci.

16. Module de frein de stationnement (100) selon la revendication 14, présentant une première unité de commande électronique (ECU1) pour la commande de la première unité pilote (110).

17. Module de frein de stationnement (100) selon la revendication 15, présentant une seconde unité de commande électronique (ECU2) pour la commande de la seconde unité pilote (120).

18. Module de frein de stationnement (100) selon l'une des revendications 13 à 17, dans lequel le premier signal de frein de stationnement (SF1) ou le second signal de frein de stationnement (SF2) est une pression pneumatique manuelle (pM) d'une soupape manuelle (130).

19. Module de frein de stationnement (100) selon l'une des revendications 13 à 18, présentant une soupape relais (140) raccordée au raccord de réserve de frein de stationnement (6) pour la réception d'une pression de réserve (pV), et raccordée à l'ensemble à soupapes de frein de stationnement (1) et recevant, au niveau d'un raccord de commande (140.4), la pression de travail de frein de stationnement (pFA) de l'ensemble à soupapes de frein de stationnement (1) et, en réponse à la réception de la pression de travail de frein de stationnement (pFA), commandant la pression de frein de stationnement (pF) au niveau du raccord d'accumulateur à ressort (8).

20. Module de frein de stationnement (100) selon la revendication 19, présentant une soupape de retenue (150) disposée entre l'ensemble à soupapes de frein de stationnement (1) et la soupape relais (140) pour le déblocage ou le blocage de la pression de travail de frein de stationnement (pFA).

21. Véhicule utilitaire, comportant un système de frein pneumatique pouvant être commandé électroniquement et un module de frein de stationnement (100) selon l'une des revendications 13 à 20.

22. Remorque comportant un système de frein de remorque pouvant être commandé électroniquement et un module de frein de stationnement (100) selon l'une des revendications 13 à 20.
